(19) Europäisches Patentamt / European Patent Office / Office européen des brevets

(11) **EP 3 911 456 B1**

(12) **EUROPEAN PATENT SPECIFICATION**

(45) Date of publication and mention
of the grant of the patent:
**09.04.2025 Bulletin 2025/15**

(21) Application number: **20741274.3**

(22) Date of filing: **20.01.2020**

(51) International Patent Classification (IPC):
**B21C 37/15** (2006.01)   **B21C 1/22** (2006.01)
**B21C 37/08** (2006.01)   **B32B 1/08** (2006.01)
**F16L 9/04** (2006.01)   **F16L 9/16** (2006.01)
**B21C 37/20** (2006.01)   **B21C 47/24** (2006.01)
**B21D 5/14** (2006.01)   **B21D 9/04** (2006.01)
**F16L 13/00** (2006.01)   **F16L 13/02** (2006.01)
**F16L 13/10** (2006.01)

(52) Cooperative Patent Classification (CPC):
**F16L 9/165; B21C 37/154; B21C 37/205;
B21C 47/247; F16L 9/006; F16L 9/16; F16L 13/00;
F16L 13/02; F16L 13/0254; F16L 13/103;
F16L 59/143;** B21D 5/14; B21D 51/10; F16L 53/00;
F16L 58/02;                                    (Cont.)

(86) International application number:
**PCT/US2020/014300**

(87) International publication number:
**WO 2020/150720 (23.07.2020 Gazette 2020/30)**

(54) **ELONGATE TUBULAR STRUCTURES**

LANGGESTRECKTE ROHRFÖRMIGE STRUKTUREN

STRUCTURES TUBULAIRES ALLONGÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2019   US 201962794638 P
28.01.2019   US 201962797426 P
08.03.2019   US 201962815451 P
11.07.2019   US 201962873124 P**

(43) Date of publication of application:
**24.11.2021   Bulletin 2021/47**

(73) Proprietors:
• **Techreo LLC
Loveland OH 45140 (US)**
• **McNeil, Kevin
Loveland OH 45140 (US)**
• **McNeil, Gregory, V.
Dewitt MI 48820 (US)**

• **Fisher, Wayne, R.
Cincinnati OH 45224 (US)**

(72) Inventors:
• **MCNEIL, Kevin
Loveland, OH 45140 (US)**
• **MCNEIL, Gregory, V.
Dewitt, MI 48820 (US)**
• **FISHER, Wayne, R.
Cincinnati, OH 45224 (US)**

(74) Representative: **Herrero & Asociados, S.L.
Edificio Aqua - Agustín de Foxá, 4-10
28036 Madrid (ES)**

(56) References cited:
**US-A- 2 104 884        US-A- 2 663 324
US-A- 2 772 121        US-A- 3 680 584
US-A- 4 652 019        US-A1- 2004 111 863
US-A1- 2009 288 467        US-A1- 2012 073 348
US-A1- 2014 311 614**

(52) Cooperative Patent Classification (CPC): (Cont.)
 F16L 2201/44

**Description**

FIELD OF THE INVENTION

The present disclosure provides improved methods for making tubular structures and tubular structures having novel features. The present disclosure more particularly provides for elongate tubular structures that can be light weight and/or comprise novel features suitable for use as pipes, structural tubes, barrels, and tanks. Further, the present disclosure provides for a unique elongate tubular structure that features options such as combining different materials, high strength-to-weight properties, and integrated couplings.

BACKGROUND OF THE INVENTION

The document US 2 104 884 A discloses a high pressure tube and a method of manufacturing it.

Pipes are long, hollow tubular structures used for a variety of purposes. They are now generally produced by two distinct methods that result in either a welded or seamless pipe. In both methods, raw steel is first cast into a more workable starting form. It is then made into a pipe by stretching the steel out into a seamless tube or forcing the edges together and sealing them with a weld.

As mentioned, tubular structures such as pipe come in generally two configurations - seamless and welded. Both generally have different uses. Seamless tubes are typically lighter-weight and have thinner walls and are generally used for transporting liquids. Welded tubes are heavier, more rigid, have a better consistency, are typically straighter, and generally used for gas transportation, electrical conduit, and plumbing. Typically, they are used in instances when the pipe is not put under a high degree of stress.

The primary raw material in pipe production is steel. Steel is made up of primarily iron. Other metals that may be present in the alloy include aluminum, manganese, titanium, tungsten, vanadium, and zirconium. Some finishing materials are sometimes used during production.

Steel pipes can generally be made by two different processes. The overall production method for both processes involves three steps. First, raw steel is converted into a more workable form (e.g., ingots, blooms, slabs). Next, the pipe is formed on a continuous or semi-continuous production line. Finally, the pipe is cut and modified to meet the customer's needs.

Molten steel is made by melting iron ore and coke (a carbon-rich substance that results when coal is heated in the absence of air) in a furnace. Most of the carbon is removed by blasting oxygen into the liquid. The molten steel is then poured into large, thick-walled iron molds, where it cools into ingots.

To produce a bloom, the ingot is passed through a pair of grooved steel rollers that are stacked. These types of rollers are called "two-high mills." In some cases, three rollers are used. The rollers are mounted so that their grooves coincide, and they move in opposite directions. This action causes the steel to be squeezed and stretched into thinner, longer pieces. When the rollers are reversed by the human operator, the steel is pulled back through making it thinner and longer. This process is repeated until the steel achieves the desired shape. During this process, machines called manipulators flip the steel so that each side is processed evenly.

Blooms are typically processed further before they are made into pipes. Blooms are converted into billets by putting them through more rolling devices which make them longer and narrower. The billets are cut by devices known as flying shears. These are a pair of synchronized shears that race along with the moving billet and cut it. This allows efficient cuts without stopping the manufacturing process. These billets are stacked and will eventually become seamless pipe.

Slabs are also reworked. To make them malleable, they are first heated to 2,200° F (1,204° C). This causes an oxide coating to form on the surface of the slab. This coating is broken off with a scale breaker and high pressure water spray. The slabs are then sent through a series of rollers on a hot mill and made into thin, narrow strips of steel called skelp. This mill can be as long as a half mile. As the slabs pass through the rollers, they become thinner and longer. In the course of about three minutes a single slab can be converted from a 6 in (15.2 cm) thick piece of steel to a thin steel ribbon that can be a quarter mile long.

After stretching, the steel is pickled. This process involves running it through a series of tanks that contain sulfuric acid to clean the metal. To finish, it is rinsed with cold and hot water, dried, and then rolled up on large spools and packaged for transport to a pipe making facility.

Both skelp and billets are used to make pipes. Skelp is made into welded pipe. It is first placed on an unwinding machine. As the spool of steel is unwound, it is heated. The steel is then passed through a series of grooved rollers. As it passes by, the rollers cause the edges of the skelp to curl together. This forms an unwelded pipe.

The steel next passes by welding electrodes. These devices seal the two ends of the pipe together. The welded seam is then passed through a high pressure roller which helps create a tight weld. The pipe is then cut to a desired length and stacked for further processing. Welded steel pipe is a continuous process and depending on the size of the pipe, it can be made as fast as 1,100 ft (335.3 m) per minute.

When seamless pipe is needed, square billets are used for production. They are heated and molded to form a cylinder shape, also called a round. The round is then put in a furnace where it is heated white-hot. The heated round is then rolled with great pressure. This high pressure rolling causes the billet to stretch out and a hole to form in the center. Since this hole is irregularly shaped, a bullet shaped piercer point is pushed through the middle of the billet as it is being rolled. After the piercing stage, the pipe may still be of irregular thickness and shape. To correct this, it is passed through another series of rolling mills.

After either type of pipe is made, they may be put through a straightening machine. They may also be fitted with joints so two or more pieces of pipe can be connected. The most common type of joint for pipes with smaller diameters is threading-tight grooves that are cut into the end of the pipe. The pipes are also sent through a measuring machine. This information along with other quality control data is automatically stenciled on the pipe. The pipe is then sprayed with a light coating of protective oil. Most pipe is typically treated to prevent it from rusting. This is done by galvanizing it or giving it a coating of zinc. Depending on the use of the pipe, other paints or coatings may be used.

The characteristics of tubular structures such as pipe can be controlled during production. For example, the diameter of the pipe is often modified depending on how it will be used. The diameter can range from small pipes to large pipes used to transport gas throughout a city. The wall thickness of the pipe can also be controlled with very limited accuracy. Often, the type of steel will also have an impact on the pipe's strength and flexibility. Other controllable characteristics include length, coating material, and end finish. In any regard, it is understood by one of skill in the art that the tubular structures such as pipe made according to the generally understood processes will typically comprise a single homogenous metal, are exceptionally heavy, have limited dimensional accuracy, and are difficult to modify or integrate components therein.

Thus, one of skill in the art understands that there is a clear need to provide a method to manufacture tubular structures, such as pipes, that are lightweight and easy to modify. Further, there is a clear need to provide a layered manufacturing process for tubular structures that can produce exceptionally high quality tubular structures where the starting inside dimension, wall thickness, and exterior dimension can be precisely defined and controlled. Further, there is a need for a layered manufacturing process that can produce unique tubular structures that feature options such as combining different materials, high strength-to-weight properties, enclosed insulation zones, secondary fluid passageways, and integrated couplings or other useful components such as sensors.

## SUMMARY OF THE INVENTION

The present disclosure provides for an elongate tubular structure according to claim 1.

Further embodiments are disclosed in the appended claims.

## DRAWINGS

FIG. 1 is a side elevational view of an exemplary process for the manufacture of tubular structures consistent with the present disclosure;

FIG. 2 is a side elevational view of another process for the manufacture of a tubular structure;

FIG. 3 is an elevational view of yet another convolutely wound tubular structure;

FIG. 4 is a cross-sectional view of the convolutely wound tubular structure of FIG. 3 taken along line 4-4;

FIG. 5 is a plan view of an exemplary sheet metal;

FIG. 6 is an elevational view of a convolutely wound tubular structure manufactured from the sheet metal of FIG. 5;

FIG. 7 is a plan view of another exemplary sheet metal;

FIG. 8 is an elevational view of a convolutely wound tubular structure manufactured from the sheet metal of FIG. 7;

FIG. 9 is a cross-sectional view of a portion of a convolutely wound tubular structure showing a coupling matingly engaged therein;

FIG. 10 is a cross-sectional view of a portion of two coupled convolutely wound tubular structures;

FIG. 11 is a side elevational view of still another process for the manufacture of a tubular structure;

FIG. 12 is a cross sectional view of a two-layer sheet metal configuration useful for the manufacture of an extended length tubular structure and manufactured according to the process shown in FIG 11;

FIG. 13 is an exemplary elevational view of a convolutely wound tubular structure using an alternative coupling where respective ends of respective tubular structures are each connected to the coupling with an attachment abutment;

FIG. 14 is a plan view of a process to provide mating and fastening engagement between respective sheet metals and a coupling by forming an attachment abutment during the winding process;

FIG. 15 is a plan view of an alternative process to provide mating and fastening engagement between respective sheet metals and a coupling by forming an attachment abutment either during the winding process or prior to the winding process;

FIG. 16 is a plan view of an alternative process to provide mating and fastening engagement between respective sheet metals and a coupling by forming an attachment abutment during the winding process to form a wandering abutment line; and,

FIG. 17 is a perspective view of an exemplary elongate structure formed by the process of FIG. 16 and having a 'wandering' abutment line.

DETAILED DESCRIPTION

As used herein, a "tubular structure" refers to a product that is generally symmetrically formed about a longitudinal axis and often has a high aspect ratio (length is much longer than the maximum cross-sectional dimension). A tubular structure may have a cross section that is circular, rectangular, square, or any other desired shape.

The terms machine direction, cross-machine direction, and Z-direction are generally relative to the direction of sheet metal 120 travel through a manufacturing process. The "machine direction" is known to those of skill in the art as the direction of travel of sheet metal 120 through the process. The "cross-machine direction" is orthogonal and coplanar thereto. The "Z-direction" is orthogonal to both the machine- and cross-machine directions.

Sheet Metal Supply Coils and Sheet Metal

Although any re-coilable material can be used (i.e., metal or non-metal), the preferred raw material for the convolutely wound tubular structures 180 (also referred to herein as tubular structures 180) of the present disclosure can be generally provided as a coil of relatively thin sheet metal. A sheet metal is typically provided in a relatively thin form where the Z-direction dimension is substantially less than the machine- and cross-machine direction dimensions. A sheet metal is convolutely wound about a mandrel having a longitudinal axis. The thickness of the sheet metal may be selected from a wide range of available gauges. In one non-limiting example, the sheet metal has a thickness of 0.002 inches to 0.100 inches (0.051 mm - 2.540 mm). The width of the supply coils may also be selected from a wide range of available slit widths. In one non-limiting example, supply coils are used which have a width of 30 inches to 96 inches (0.762 meters - 2.438 meters). The sheet metal may be selected to provide the desired properties of the resulting tubular structure. Many metals are suitable and include, but are not limited to, carbon steel, stainless steel, metal alloys, titanium, cobalt, aluminum, brass, and copper. The sheet metal may be prepared using various manufacturing methods known in the art to provide sheet metal with the desired physical properties prior to being wound into supply coils. For example, carbon steel may be provided as cold rolled sheet metal coils, hot rolled sheet metal coils, or galvanized sheet metal coils.

Unwinding

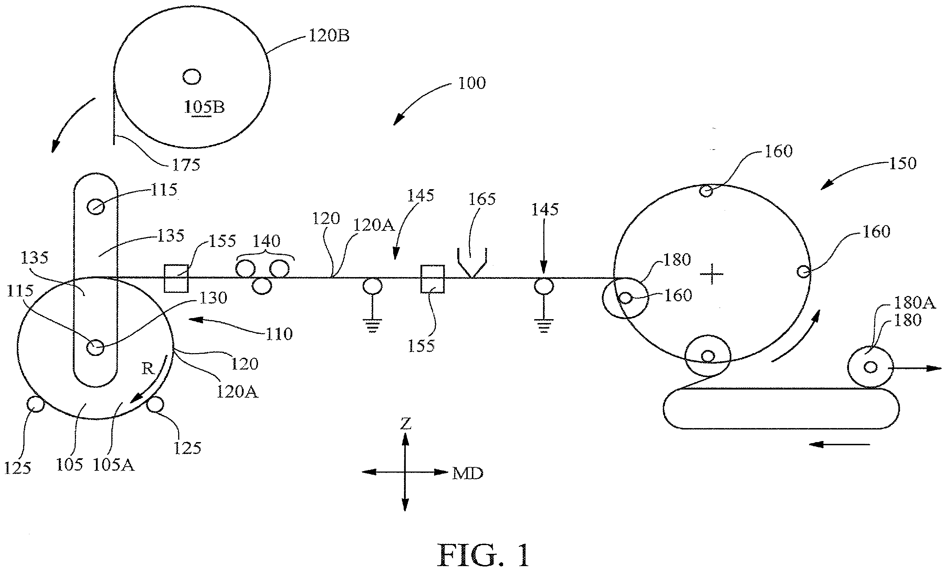

As shown in FIG. 1, a process 100 for making tubular structures 180 (also referred to herein as manufacturing process 100 and/or process 100) provides for the sheet metal supply coils 105 to be loaded onto a mandrel 115 of an uncoiler apparatus 110 that supports the sheet metal supply coils 105 (also referred to herein as supply coils 105) while rotating them in the direction, R, that unwinds the sheet metal 120 disposed convolutely about the supply coil 105 and feeds the sheet metal 120 to downstream processing operations. The exterior circumferential surface of the supply coil 105 can be supported by rollers 125 positioned underneath the supply coil 105 where the longitudinal axis of each support roller 125 is parallel to the longitudinal axis 130 of the supply coil 105. Each support roller 125 may be driven to rotate and unwind the supply coil 105.

A support mandrel 115 may be inserted through the core of the supply coil 105. The support mandrel(s) 115 can be inserted into a respective supply coil 105 and affixed to the uncoiler apparatus 110 core via mounting arms 135 sized to engage both ends of the core of the supply coil 105. Both ends of the support mandrel 115 may be supported within the uncoiler apparatus 110 and the mandrel may be connected to a motor to rotate the supply coil 105 and unwind the sheet metal 120. Both support rollers 125 and a support mandrel 115 may be used to support the supply coil 105. Other uncoiling or unwinding apparatus configurations known to those of skill in the art may also be used to perform the supply coil 105 unwinding operation.

Sheet Metal Conveying and Handling

After the sheet metal 120 is unwound from the supply coil 105, it is conveyed through downstream operations until it is wound in the recoiler 150 to create the desired tubular structure 180. Driven or non-driven rollers 140 and stationary supports 145 may be used to support and convey the sheet metal 120 while defining the web path throughout the manufacturing process 100. In a preferred embodiment, the sheet metal 120 processing components are mounted such that their longitudinal axes are level within relatively close tolerances (e.g., level across the entire length +/- 0.002 inches or +/- 0.051 mm) to ensure consistent tracking of the sheet metal 120 throughout the manufacturing process 100.

In a preferred embodiment, all sheet metal 120 processing components used in the manufacturing process 100 are mounted with their longitudinal axes parallel to one another within relatively close tolerances (e.g. +/- 0.002 inches or +/- 0.051 mm) to provide consistent tracking of the sheet metal 120 throughout the manufacturing process 100. Tension of the sheet metal 120 can be controlled to provide uniform processing operations. Suitable tension control methods known in the art include, but are not limited to, sheet metal accumulation zones (e.g., a single accumulation loop within a pit between unit operations), sheet metal festoon accumulators, dancers, and load cells which may be used to regulate relative speeds between consecutive unit operations. Other sheet metal tension control techniques known to those of skill in the art may also be used.

In a preferred embodiment, the sheet metal 120 tension can be controlled with load cells 155 that detect the tension and force within the sheet metal 120 at desired location(s) within the process 100, comparing the force to a target, and adjusting the relative speed of any adjacent sheet metal 120 conveying devices used in the manufacturing process 100 to maintain the target force and tension within the sheet metal 120. In this regard, one of skill in the art can provide a suitable tension control algorithm that compares an actual tension in the sheet metal 120 with a desired target tension to determine a tension adjustment factor. The tension adjustment factor can then be applied to the manufacturing process 100 equipment to provide for an adjustment of the speed of the sheet metal 120 by process control equipment to provide for a corrected sheet metal 120 speed and thereby adjust the sheet metal 120 tension. Such a process can be accomplished in-situ or by any off-line process suitable for one of skill in the art.

Winding Mandrels

The process 100 for making tubular structures 180 provides for a sheet metal 120 to be attached to a winding mandrel 160 (mandrel 160). The winding mandrel 160 is a replaceable support that defines the interior cross sectional shape and size of the desired tubular structure 180. The mandrel 160 may be fabricated to provide the desired length, cross-sectional shape, and cross-sectional dimensions of the tubular structure 180 to be produced. The mandrel 160 can be slightly longer than the width of the sheet metal 120 used to form the tubular structure 180. The mandrel 160 shape may be selected to provide the desired cross-sectional shape (geometry) of the interior of a tubular structure 180, the elongate tubular structure, and or the ultimate exterior geometry of the resulting tubular structure 180, and/or elongate tubular structure. The elongate tubular structure can have a cross-sectional geometry selected from the group consisting of circular, polygonal (e.g., rectangular, square, triangular, hexagonal, etc.), elliptical, and combinations thereof.

The cross-sectional dimensions of the mandrel 160 may be selected to provide the desired interior cross-sectional dimensions of the tubular structure 180. For example, the mandrel 160 may be circular and have an outside diameter equal to 1 inch. Alternatively, the mandrel 160 may be circular and have an outside diameter equal to 100 inches. Yet still, the mandrel 160 may be rectangular and comprise outside dimensions equal to 30 inches by 20 inches. The mandrel 160 design is very flexible and can provide a very wide range of tubular structure 180 interior cross sectional shapes and sizes, thereby eliminating a major constraint in prior art fabrication processes for tubular structures 180.

Mandrel 160 is preferably designed to provide for the leading edge 175 of the sheet metal 120 forming tubular structure 180 to be disposed thereupon and/or attached thereto. Any adherence force should be sufficient to maintain the desired sheet handling tension and prevent slippage between the sheet metal 120 and the mandrel 160 surface as the sheet metal 120 is convolutely disposed about the mandrel 160 in the first revolution as the winding process 100 begins.

Vacuum ports can be provided within the surface of the mandrel 160. The force exerted by the vacuum level may be sufficient to provide the desired holding force between the sheet metal 120 and the mandrel 160. The vacuum force may be maintained for the initial portion of the process 100 and then turned off when no longer needed. After the winding process 100 is complete, positive air pressure may be provided through the ports to enable removal of the convolutely wound tubular structure 180 from the winding mandrel 160.

A first end of the mandrel 160 can be coupled to a motor to provide the rotation force for the winding process 100. The second end distal from the first end of the mandrel 160 can be supported throughout the winding process 100. The second end support can be disengaged and repositioned a sufficient distance to remove the convolutely wound tubular structure 180 from the mandrel 160 after the winding process 100 is complete.

Mandrels 160 can be fabricated from a wide range of materials and by using methods known in the art. Using fabrication capabilities known in the art, mandrels 160 may be produced to provide the desired tubular structure interior dimension to a very accurate level. For example, the mandrel 160 length and cross sectional dimensions can be +/- 0.001 inches from the target. Mandrels 160 can be made for each desired cross sectional shape and size combination and re-used during production of tubular structures 180 to have the desired interior cross-sectional shape and size.

Adjustable geometry mandrels 160A comprising similar interior cross-sectional shapes but with different sizes throughout a significant range may be used to produce tubular structures 180. For example, an adjustable circular arbor mandrel 160A, known to one of skill in the art, may be used during the production of round tubular structures 180 having an interior diameter ranging from 12 inches to 16 inches.

Center Winding

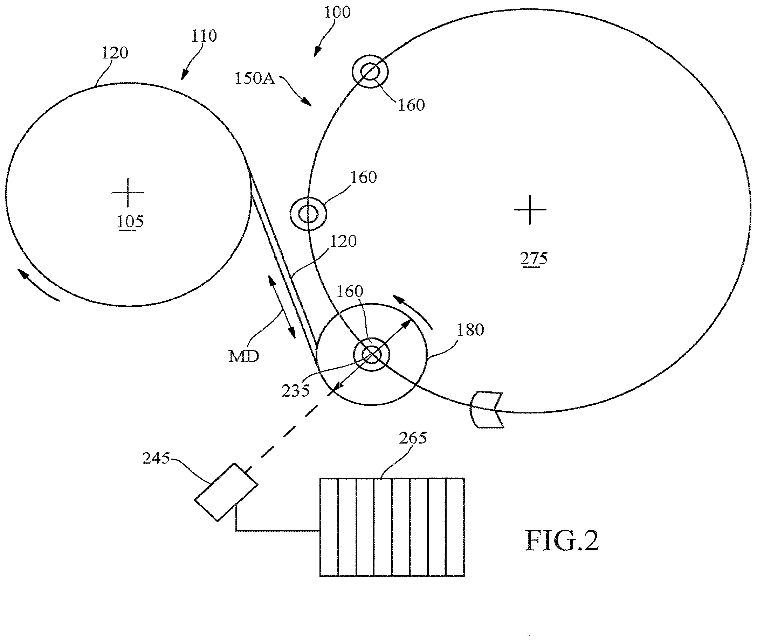

As shown in FIG. 2, one embodiment of the process 100 for making tubular structures 180 provides for a tubular structure 180 to be formed by convolutely winding a sheet metal 120 about the longitudinal axis of the tubular structure 235 while the winding force is transmitted from a motor to a winding mandrel 160. In this configuration, known in the art as center winding, the rotating speed of the mandrel 160 is controlled to provide a uniform surface speed at the point where the incoming sheet metal 120 first contacts the winding tubular structure 180, from the beginning of the winding cycle through the completion of the winding cycle.

Recoiler 150A can provide for a plurality of mandrels 160 to be disposed upon a turret 275 that is rotatable about a rotational axis. In this manner, a sheet metal 120 supplied from supply coil 105 from uncoiler 110 can be convolutely wound about a first mandrel 160 while a second mandrel 160 is disposed in a position to receive sheet metal 120 after the tubular structure 180 disposed upon the first mandrel 160 is complete and rotated away from a defined winding position. In other words, when the tubular structure 180 being formed from sheet metal 120 about a first mandrel 160 disposed upon the turret 275 is completed (e.g., has attained a desired thickness), the sheet metal 120 can be severed forming a first tail portion, the first tail portion can be attached to the previous convolution of tubular structure 180 (i.e., the tail portion formed in sheet metal 120 bonded to an immediately subjacent convolution of the first sheet metal to form a tubular structure 180), the mandrel 160 having the tubular structure 180 disposed thereabout can be rotated away from a winding position, turret 275 can be rotated about its rotational axis to position a new mandrel 160 into the winding position, and the leading edge of the severed sheet metal 120 can be fixably disposed upon, or attached to, the new mandrel 160. This can provide a nearly continuous production of tubular structures 180.

The desired speed profile can be pre-calculated for a given tubular structure 180 geometry. The variables that define the speed profile include the sheet metal 120 incoming speed, the tubular structure 180 interior cross-sectional dimension, the tubular structure 180 exterior cross-sectional dimension, and the thickness of the sheet metal 120 being wound. In embodiments where the sheet metal 120 is deformed out-of-plane for portions of the tubular structure 180 wall, the average in-wound thickness of the deformed sheet metal 120 (which may include some compression) is used for the thickness value for that portion of the speed profile.

A laser measurement system 245 (or any measurement system) can be used to measure the outer diameter of the tubular structure 180 as it is being wound. A controller 265 can be operatively and/or communicatively coupled to the laser measurement system 245 as well as the equipment associated with the formation of tubular structure 180 to control when each discrete unit operation is activated or deactivated during the tubular structure 180 formation process.

For example, a tubular structure 180 can be a circular pipe having an inside diameter of 12 inches and an outside diameter of 16 inches. The incoming sheet metal 120 is undeformed, has a uniform thickness of 0.020 inches, and has a speed at the recoiler 150 of 500 feet per minute. The wall thickness of the pipe (i.e., tubular structure 180) may be calculated using the formula:

$$\text{(Outside Diameter} - \text{Inside Diameter)} / 2 \text{ Sides}$$

In this example: (16 inches - 12 inches) / 2 = 2 inches
The number of mandrel 160 revolutions required to form the pipe may be calculated using the formula:

$$\text{Wall Thickness} / \text{Sheet Metal Thickness}$$

In this example: 2 inches / 0.020 inches = 100 revolutions
The outside diameter of the winding pipe after "Y" revolutions may be calculated using the formula:

$$\text{Inside Diameter} + (Y \times \text{Sheet Thickness} \times 2 \text{ Sides})$$

In this example after 10 revolutions: 12 inches + (10 x 0.020 inches x 2) = 12.4 inches
In this example after 50 revolutions: 12 inches + (50 x 0.020 inches x 2) = 14 inches
In this example after 100 revolutions: 12 inches + (100 x 0.020 inches x 2) = 16 inches
The required rotational speed of the mandrel 160 to maintain a uniform surface speed at the point where the incoming sheet metal first contacts the winding tubular structure 180 may be calculated using the formula:

Mandrel Revolutions per Minute (RPM) = Incoming Sheet Metal Speed (feet per minute)/Tubular Structure Perimeter (feet) at that point in the winding cycle

After 0 revolutions: Mandrel RPM = 500 / (12 inches x $\pi$ / 12 inches / feet) = 159.15
After 10 revolutions: Mandrel RPM = 500 / (12.4 inches x $\pi$ / 12 inches / feet) = 154.02
After 50 revolutions: Mandrel RPM = 500 / (14 inches x $\pi$ / 12 inches / feet) = 136.41
After 100 revolutions: Mandrel RPM = 500 / (16 inches x $\pi$ / 12 inches / feet) = 119.37

One of skill in the art may use such calculations to create a target speed profile for all points in the process 100 for the tubular structure 160. Motor controllers known in the art may use such speed profiles to regulate the motor and mandrel 160 rotational speeds at all points throughout the winding cycle, thereby providing a reliable means for winding the desired tubular structure 180.

A similar approach may be used to control the winding speed of a non-circular tubular structure 180, such as one comprising a rectangular or square interior cross-section. The calculations are similar, although the formulae for determining the instantaneous outside diameter or perimeter must be altered to account for the difference in geometry between the desired interior cross-section and the circular cross-sectional example described above.

Interior Dimension, Wall Thickness, and Outer Dimension Flexibility and Accuracy

A key advantage of the current invention relative to prior art is the unprecedented flexibility to produce tubular structures 180 with a very wide range of interior dimension, wall thickness, and exterior dimension combinations. As described *supra,* nearly any desired tubular structure 180 interior cross sectional shape and size can be provided by an appropriately designed winding mandrel 160. Once the winding process 100 is initiated by wrapping the incoming sheet metal 120 around the winding mandrel 160, the winding process 100 continues until the desired wall thickness and exterior dimensions are produced, at which point the winding process is terminated, and the sheet metal 120 is cut off. The winding process 100 can be easily terminated only a few winding revolutions after the start of the winding process, thereby producing a relatively thin wall. If desired, the winding process 100 may also continue for a relatively extended period after the winding process 100 is initiated before the process 100 is terminated, and the sheet metal 120 is cut off. In this latter method, a very thick wall tubular structure 180 may be produced.

In one embodiment, the outer dimensions of the winding tubular structure 180 can be measured throughout the entire winding process 100. Measurement systems are known in the art to continuously measure the outer dimensions of the winding tubular structure 180. For example, a digital micrometer can contact the winding structure and provide an accurate measurement (+/- 0.001 inches) of the wound wall thickness. Further, non-contact laser triangulation measurement systems can be used to scan the winding tubular structure 180 and provide an accurate measurement (within 0.001 inches) of the wound wall thickness. Measurement systems may be used to monitor the winding process 100 and provide a winding termination signal when a target wall thickness and corresponding outer dimensions of a tubular structure 180 have been produced.

The process 100 can provide both unprecedented flexibility for the cross-sectional shape and size of tubular structures 180 and very accurate production of the desired interior cross sectional dimensions, wall thickness, and cross sectional exterior dimensions. All three parameters may be controlled within very tight tolerances over a wide size range. Presume a round pipe having a target 30.000 inch inside diameter, a 36.000 outside diameter, and a corresponding wall thickness of 3.000 inches is desired. A sheet metal 120 with a uniform thickness of 0.030 inches is used to form the pipe. A mandrel 160 with an outside diameter of 30.000 inches is used for producing the pipe. The sheet metal 120 is wound around the mandrel 160 using a hybrid winding process. A laser triangulation system can monitor the wall thickness from the start of the process 100 until the target of 3.000 inches is produced, at which point the process 100 is terminated, and the sheet metal 120 is cut off. Here, the pipe will have approximately 100 revolutions of sheet metal to form the wall (3.000 inch wall/0.030 inch thick sheet metal). The final pipe will be at or very close to the target dimensions for inside diameter, wall thickness, and outside diameter. Expected dimensional variations in these parameters is less than +/- 0.1% of the target dimension.

A source of minor variation for the inside diameter, wall thickness, and outside diameter is the leading and trailing edge of the sheet metal 120 used to form the pipe. The inside diameter of the pipe measured just downstream of the leading edge of sheet metal 120 may measure 30.000 inches. The same measurement taken just upstream of the leading edge 175 may be approximately 30.030 inches due to the thickness of the sheet metal 180 leading edge 175. A similar effect may be found on the exterior of the pipe at the trailing edge of the sheet metal 120. This variation in dimensional accuracy may be mitigated by using a thinner sheet metal 120 for the inner and outer portions of the tubular structure 180. For example, the first few layers and last few layers of the pipe may be formed using a sheet metal 120 comprising a relatively small thickness of 0.003 inches, thus reducing approximately 90% of the minor dimensional variation. In a second embodiment, the leading edge 175 of the sheet metal 120 may be bevel ground or machined by means known in the art to eliminate the step and provide a very thin, blended-in edge prior to wrapping the sheet metal 120 around the mandrel 160 and initiating the winding process 100. The trailing edge 175 of the sheet metal 120 may be similarly ground or machined after the process 100 is completed. A grinding or machining operation can also eliminate approximately 90% of a minor dimensional variation. Using one, or both, of these methods can further improve the accuracy of the produced tubular structure 180. It is preferable that any minor variations associated with the sheet metal 120 ends in wound tubular structures 180 be mitigated so that, for example, the actual inside diameter, wall thickness, and outside diameter variances from their respective targets are all less than +/- 0.1% of target. It can be preferable that the actual inside diameter, wall thickness, and outside diameter variances from their respective targets are all less than +/-0.01% of target. One of skill in the art would clearly understand that the resulting inside diameter, a wall thickness, and an outside diameter of the elongate tubular structure can have a standard deviation of less of than about 1.5% of a respective average measurement for said inside diameter, said wall thickness, and said outside diameter as determined by a Pipe Dimension Measurement system.

Additionally, the structure of the produced tubular structure 180 can be further enhanced by providing a secondary convolute winding. Such a process can increase wall thickness of the tubular structure 180, provide a change in the outer material comprising the tubular structure 180, as well as improve the appearance of the produced tubular structure 180. By way of example, a secondary convolute winding can be provided to the tubular structure 180 by first attaching the leading edge 175 of the second sheet metal 120 to the tubular structure 180 at a position proximate to but not overlapping the trailing edge 175 of the first sheet metal 175. Appropriate bonding may be provided between the respective layers of the first sheet metal 120 and second sheet metal 120 to provide the necessary structural integrity as a desired number of additional layers of second sheet metal 120 are wound onto tubular structure 180. In other words, an additional wind to the convolutely wound structure is provided after the fact.

Coaxial Void Creation

Tubular structures having improved strength-to-weight properties may be desired and/or required. Here, at least a portion of the convolutely wound tubular structure is formed with a net structural density that is substantially less than the density of the constituent sheet metal material used to form the tubular structure. The reduced density portion of the tubular structure wall may be designed to optimize any desired mechanical property or combination of mechanical properties of the tubular structure. This includes, but is not limited to, mass, weight, shear strength, axial tensile strength, axial compression strength, torsional strength, modulus of elasticity in a desired plane or orientation, internal pressure rating, and external pressure rating.

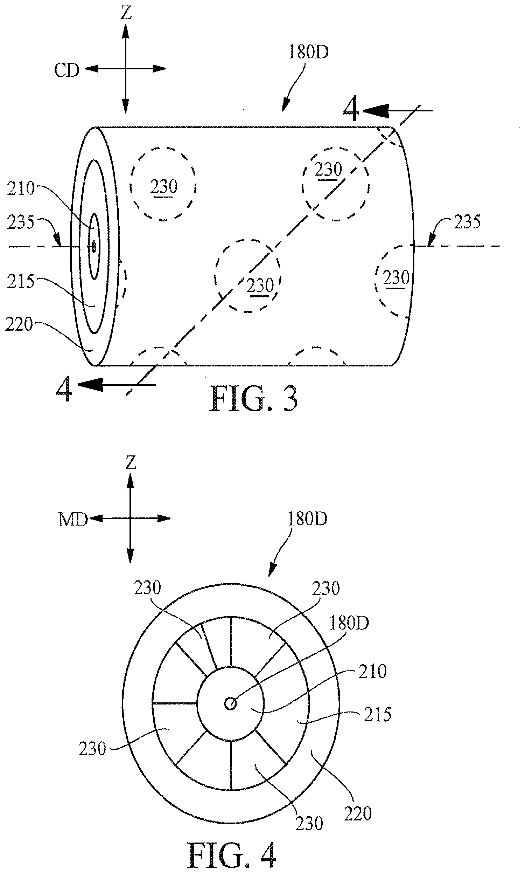

FIGS. 3 and 4 provide an exemplary tubular structure 180D with improved strength-to-weight properties. The tubular structure 180D may be produced by convolutely winding a sheet metal comprising pre-formed voids 230 to form at least a portion of the tubular structure 180D. For example, a first inner region 210 of the tubular structure 180 can be formed by convolutely winding a homogenous sheet metal around the longitudinal axis 235 of the tubular structure 180. A second region 215 of the tubular structure 180D is then formed by winding a second sheet metal having pre-formed voids 230, such as circles, around the first inner region 210 about the longitudinal axis 235 of the tubular structure 180D by overlying the first sheet metal. A perforated sheet metal having a total void area of 30% to 80% can be used to form at least a portion of the second region 215 of the tubular structure 180D. A third region 220 of the tubular structure 180D is then formed by winding the first homogenous sheet metal around second region 215 about the longitudinal axis 235 of the tubular structure 180D and overlying the second sheet metal until the desired wall thickness and the desired outer dimensions of the tubular structure 180D are attained. The tubular structure 180D formed in this manner can have a surprisingly substantially lower total mass with a relatively minor decrease in strength, modulus of elasticity, and pressure rating. This type of improved strength-to-weight tubular structure 180D may be especially useful in aeronautical, space, and inter-stellar applications.

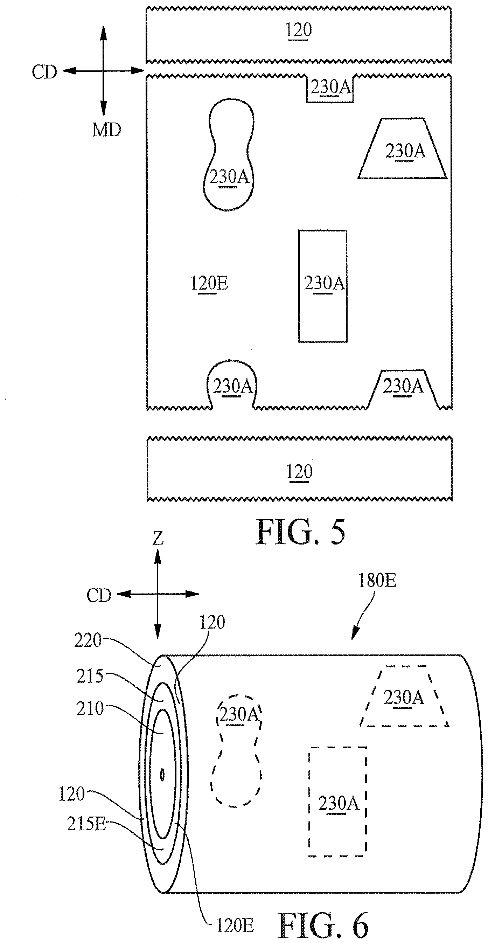

As shown in FIGS. 5 and 6, a tubular structure 180E with improved strength-to-weight properties may be produced by unwinding a homogenous sheet metal 120, forming voids *in situ* in selected portions of the sheet metal 120 with a void generation system 240 to form a sheet metal 120E portion having voids disposed therein, and then winding the sheet metal 120E into tubular structure 180E. In a non-limiting example, the voids 230A can be registered in the cross-machine direction but unregistered in the machine direction. A first sheet metal 120 supplied in a first sheet metal supply coil 105 is unwound in an uncoiler apparatus 110 and fed into a downstream recoiler 150 where it is convolutely wound to form the first inner region 210 of the tubular structure 180E. After the first inner region 210 of the tubular structure 180E is formed, voids 230A are generated in the sheet metal 120 to form a sheet metal 120E having voids disposed therein prior to winding the sheet metal 120E to form the second region 215 of tubular structure 180E.

Voids 230A can be generated to form sheet metal 120E portion by mechanical contact operations such as punching or cutting. The punching or cutting operations may remove discrete portions of sheet metal 120E to reduce mass while still maintaining substantial material continuity in both the machine- and cross-machine directions. Alternatively, voids 230A can be generated to form sheet metal 120E by non-mechanical cutting operations such as water jet cutting or laser cutting. Water jet and laser cutting systems are known in the art and can be effective in cutting sheet metal. Both water jet and laser cutting systems also have advantages for quickly and easily changing the void size, shape, or spacing. Since no mechanical tooling is used in these systems, they are more flexible and can quickly make changes via programming to control the position of the device that cuts the sheet metal. Other metal cutting techniques known in the art may also be used to generate voids 230A. The position, size, shape, and spacing of the discrete voids 230A can be selected to provide a reduced mass and preservation of mechanical properties such as strength, modulus of elasticity, and pressure rating. After the second region 215 of the tubular structure is formed with the sheet metal 120E, the void generation system 240 can be de-activated. The homogenous first sheet metal 120 can then be wound to form the third region 220 of the tubular structure 180E. It may be preferable to bond at least a portion of the adjacent layers within the inner 210, second 215, and third 220 regions of the tubular structure 180E as discussed *supra.* The tubular structure 180E can have substantially lower total mass with a relatively minor decrease in strength, modulus of elasticity, and pressure rating. This type of improved strength-to-weight tubular structure 180E may be especially useful in aeronautical and space applications.

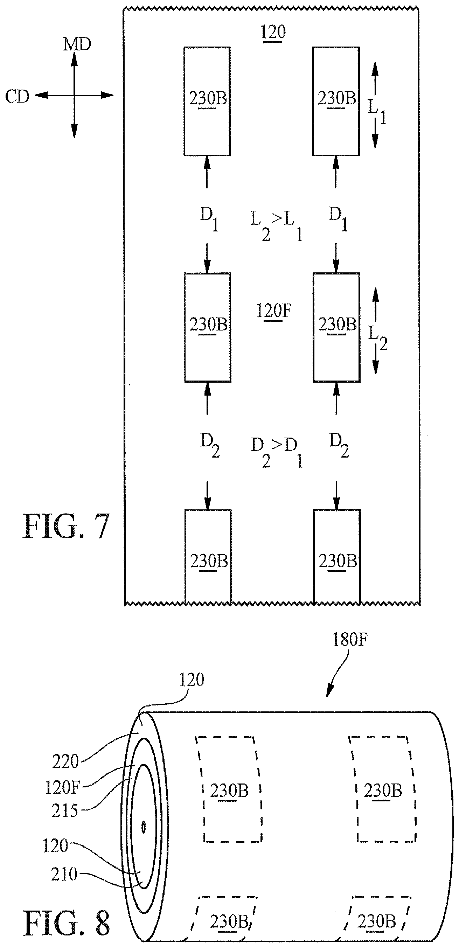

Alternatively, as shown in FIGS. 7 and 8, a tubular structure 180F with improved strength-to-weight properties may be produced by unwinding a homogenous sheet metal 120, forming voids 230B in the sheet metal 120 to form a sheet metal 120F, and winding the first sheet metal 120E into a tubular structure 180F as discussed *supra.* The voids 230B can be registered in both the cross-machine direction and the machine direction. A laser cutting system may be controlled to create any desired void 230B position, size, and shape. The machine direction void 230B spacing and cross machine void spacing may also be controlled. Voids 230B can be generated in the sheet metal 120 to form relatively high aspect ratio rectangles with their minimum dimension generally parallel to the longitudinal axis 235 of the tubular structure 180F. The machine direction spacing $D_1$, $D_2$ of the voids 230B can be increased for succeeding voids 230B so that a void 230B overlays a preceding void 230B when wound into the tubular structure 180F. The machine direction void 230B spacing increase (i.e., $D_2 > D_1$) can be proportional to the thickness of the first metal material 200 forming sheet metal 120 and may be pre-determined and programmed into the laser cutting system by means known in the art. The machine direction length $L_1$, $L_2$ of the voids 230B can be increased for succeeding voids 230B so that a void 230B overlays a preceding void 230B when wound into the tubular structure 180F. Additionally, the machine direction void length increase (i.e., $L_2 > L_1$) can be proportional to the thickness of the first metal material 200 forming sheet metal 120 and may be pre-determined and programmed into the laser cutting system by means known in the art. Further, voids 230B can be axially aligned and circumferentially aligned, thus creating continuous structural regions in the axial direction which provide a tubular structure 180F with a relatively high cross-sectional moment of inertia and correspondingly low axial deflection.

After the second region 215 of tubular structure 180F is formed with sheet metal 120F comprising the desired voids, the void generation system 240 is de-activated and the remainder of tubular structure 180 formed with the homogenous sheet metal 120 as discussed *supra.* The tubular structure 180F formed in this manner has substantially lower total mass with a relatively minor decrease in strength, modulus of elasticity, and pressure rating. This type of improved strength-to-weight tubular structure 180F may be especially useful in aeronautical and space applications.

Sheet Surface Modifications

In some applications, it may be desired to use tubular structures 180 having enhanced surface properties on the interior and/or exterior of the tubular structure 180. For example, a food processing operation may require a smooth pipe interior that is resistant to buildup and microbial contamination. In prior art pipe fabrication processes, such as the production of seamless pipe, this is difficult to achieve. The original formed surface is, by nature, rough. Secondary smoothing processes may mitigate the roughness. But these are expensive, time consuming, and limited in effectiveness. A layered fabrication process, combined with the low temperature processing capability, can provide the desired pipe interior comprising enhanced surface properties

For example, 316 grade cold rolled stainless steel is supplied in sheet metal form. The sheet metal may be produced with an ASTM No. 8 finish that is exceptionally smooth and mirror-like in its appearance. This mirror-like surface may be used to form the first inner region of the desired tubular structure. A standard 316 stainless steel with a relatively rougher ASTM No. 2B finish may be used to form the succeeding second region and third region of the pipe. This fabrication process provides the desired enhanced surface for the pipe's interior while maintaining the use of standard, cost effective materials for the overwhelming majority of the pipe's total material. The pipe's exceptionally smooth interior surface may effectively mitigate buildup and contamination as particles cannot easily stick to it. Cleaning and flushing operations can also easily remove any small areas of buildup that may occur.

In another non-limiting example, a low surface energy coating, microbial resistant coating, or anti-microbial coating may be applied to the 316 grade stainless steel sheet metal with an ASTM No. 8 finish prior to winding the sheet metal into the first inner region of the pipe. This selective coating may further enhance the surface properties of the pipe's interior and further mitigate buildup, contamination, and microbial growth. Any combination of coatings and finishing operations may be used to selectively improve the sheet metal 120 surface which subsequently forms the interior surface of a wound tubular structure 180.

Similar techniques may be used to provide enhanced surface properties for the exterior surface of the tubular structure 180. These improvements may mitigate environmental damage by providing corrosion resistance, mitigating algae growth in subsea applications, and the like. Any combination of coatings and finishing operations may be used to selectively improve the exterior surface of a wound tubular structure 180.

Adhesive Bonding of Layers

It may be necessary to constrain the respective layers from unwinding or unraveling during transportation and end usage in some layered tubular structure 180 applications. In the invention, the layers are adhesively bonded 190 during the manufacturing process using a class of adhesives known as structural adhesives. These adhesives are typically based on epoxy, acrylic, urethane, or cyanoacrylate chemistries and are known in the art to provide very strong bonds between adjoining metal surfaces.

In a preferred embodiment, adhesive is applied to one side of the sheet metal 120 after other processes such as splicing, void generation, and out-of-plane deformation are complete, and before the winding process. Adhesive application processes 190 known in the art are suitable for applying the liquid adhesive in this application. These fluid application processes include spray, extrusion through nozzles, extrusion through slot dies, gravure, offset gravure, flexographic, permeable rolls, jetting, and spray systems. In one non-limiting example, a permeable roll is used to apply adhesive to sheet metal 120 just prior to sheet metal 120 being wound to form tubular structure 180. Adhesive is applied in a desired pattern (defined by the aperture pattern in the surface of the permeable roll) to the top face of sheet metal 120 as sheet metal 120 travels in a near-horizontal plane just prior to entering recoiler 150 and the winding process. The application pattern may be optimized for the particular tubular structure 180 application. For example, adhesive can be applied in a continuous line at the transverse leading edge of the sheet metal 120, continuous lines along both edges of the sheet metal 120, and in discrete dots spaced apart in regular intervals in both the machine direction and cross machine direction.

As sheet metal 120 enters the recoiler 150, it is attached to winding mandrel 160 via vacuum ports in the surface of mandrel 160. The bottom face of sheet metal 120, without adhesive, is brought into contact with the surface of mandrel 160. As mandrel 160 rotates, sheet metal 120 is guided around the longitudinal axis of mandrel 160 to form first layer 210 of tubular structure 180. After approximately one revolution, the leading edge 175 of the top face of sheet metal 120 is brought into contact with the bottom face of sheet metal 120 entering the winding process and layer-to-layer bonding occurs. Continued rotation of mandrel 160 conveys additional sheet metal 120 into the winding process 100, with adhesive previously applied in a pattern on the top face continuing to contact and bond with the bottom face of the sheet metal 120 entering the winding process. This process continues until the tubular structure 180 wall thickness and desired outer dimensions are attained. In a preferred embodiment, adhesive application is discontinued for the last length of sheet metal 120 corresponding to the final perimeter of tubular structure 180. This ensures no adhesive is present on the exterior of the tubular structure 180. In another embodiment, a supplemental line of adhesive can be applied at the transverse trailing edge of sheet metal 120 to effectively seal the exterior edge layer.

Once adhesive has been applied to at least one face of sheet metal 120 entering the winding process, the winding tension and the force exerted by an adjustable pressure roll 170, which presses in a generally perpendicular direction to sheet metal 120 to compress sheet metal 120 against the winding tubular structure 180, provide sufficient pressure to effectively bond the layers of tubular structure 180 together during the winding process. Some adhesives can require curing at elevated temperatures. If these adhesives are selected, the finished tubular structure 180 may be placed inside an oven known to provide the required curing environment. Some adhesives also require two parts, with one fluid acting as a catalyst to activate the bonding in the other fluid. If these adhesives are used, a secondary permeable roll may be used to apply the second adhesive to the bottom face of sheet metal 120 prior to the winding process. The bottom face adhesive pattern may match the top face adhesive pattern and be registered in both the machine direction and cross machine direction by means known in the art to ensure the two adhesives are brought into face to face contact in the winding process.

The continuous lines of adhesive at the transverse leading edge 175, transverse trailing edge, and both sides of sheet metal 120 ensure uninterrupted sealing at all edges of tubular structure 180. This can ensure no inter-layer migration of the interior fluid or gas conveyed within tubular structure 180 and can prevent exterior inter-layer migration of environmental liquids or gas. In other words, a tail portion formed in sheet metal 120 can be adhesively bonded to an immediately subjacent convolution of said first sheet metal to form a tubular structure 180.

The adhesive bonding process provides an effective means for creating a rigid structure from multiple layers of a relatively flexible sheet metal 120. The strength, modulus of elasticity, and pressure ratings of such tubular structures are theoretically equivalent to homogenous material structures comprising similar materials and dimensions.

Welding of Layers

Welding 195 can be used to constrain the layers from unwinding or unraveling during transportation and end usage. In one embodiment, the layers are welded during the fabrication process using a fiber laser system.

The welding operation 195 can be applied to one side of sheet metal 120 after other processes such as splicing, void generation, and out-of-plane deformation are complete, and before or during the winding process. Many welding processes are known in the art and several are suitable for permanently joining adjacent layers of sheet metal 120 in a wound tubular structure 180. These welding processes include shielded metal arc welding, gas metal arc welding, flux-cored arc welding, gas tungsten arc welding, submerged arc welding, electron beam welding, and laser welding. Several types of laser welding are known in the art and may be used, including gas lasers (which use a gas such as helium, nitrogen, or carbon dioxide as the medium), solid state lasers (which use solid media such as neodymium in yttrium aluminum garnet, or Nd:YAG), and fiber lasers (in which the medium is the optical cable itself). Fiber laser welding can be used to permanently attach adjacent layers of sheet metal 120 in a wound tubular structure 180. Fiber laser welding may permanently join as few as two adjacent layers or, if more power is applied, permanently join three or more adjacent layers of sheet metal 120. Fiber laser welding may be done in continuous lines or in discrete zones. The laser head may be positioned near the sheet metal to be welded and moved quickly and accurately in the x, y, and z planes by means known in the art to weld in any desired pattern. To improve operating rate and efficiency, multiple laser heads may be used to simultaneously weld multiple locations of sheet metal 120. In short, a tail portion formed in sheet metal 120 can be welded to an immediately subjacent convolution of said first sheet metal to form a tubular structure 180.

In a non-limiting example, three fiber lasers are mounted on the downstream side of the recoiler 150 and pointed in a generally horizontal plane toward the rewinding tubular structure 180. The first laser is mounted at a first machine direction edge of the winding sheet metal 120 and provides a continuous machine direction edge weld for a first end of the winding tubular structure 180. The second laser is mounted at a second opposite machine direction edge of the sheet metal 120 and provides a continuous machine direction edge weld for the second opposite end of the winding tubular structure 180. The third laser is movably mounted and provides continuous cross machine direction edge welds for the leading and trailing ends of the sheet metal 120 for each tubular structure 180. The third laser can also provide discrete spot welds across the face of the winding tubular structure 180. Discrete spot welds may be made in any desired position, any desired pattern, may have any desired spacing interval in the machine direction, and may have any desired spacing interval in the cross machine direction. A wound tubular structure 180 can be permanently welded together in a continuous area along both machine direction ends, both the leading and trailing transverse edges of the sheet metal 120, and at a sufficient number of interior locations to provide a rigid structure.

The welding process 195 can provide an effective means for creating a rigid structure from multiple layers of a relatively flexible sheet metal 120. The strength, modulus of elasticity, and pressure ratings of such tubular structures 180 are theoretically equivalent to homogenous tubular structures comprising similar materials and dimensions.

End to End Engagement

The elongate tubular structures of the present disclosure comprise a first tubular structure and a second tubular structure wherein a first end of the first tubular structure is matingly and fasteningly engaged to a first end of the second tubular structure in order to produce the longer elongate structure. The two structures may be matingly and fasteningly engaged by welding the two ends of the structures together or by using engagement couplings.

Welding Coupling

The respective ends of the two structures can be welded together in a mated fashion using any typical pipe welding process known in the industry including, but not limited to shielded metal arc welding, laser beam welding, electron beam welding, magnetic pulse welding, and friction stir welding.

Couplings

The respective ends of the two structure can alternatively coupled using typical pipe connecting devices know in the industry.

Prior art tubular structures require substantial secondary operations after the production of the tubular structures to add required ancillary components. The ancillary components include, but are not limited to, couplings for joining tubular structures in end-to-end configurations, flow sensors, pressure sensors, vibration sensors, and temperature sensors. The layered winding method 100 of the present disclosure provides the opportunity to integrate such components into the production of tubular structures 180, eliminating altogether the need for costly and less efficient secondary integration operations, or to minimize the secondary integration operations.

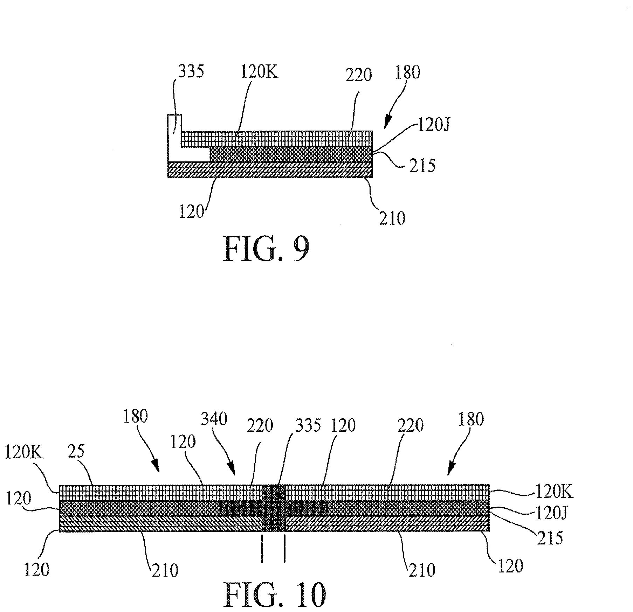

As shown in FIGS. 9-10, one embodiment provides for a coupling 335 to be integrated into the production of a tubular structure 180 to enable the mating and fastening engagement of tubular structures 180 in an end-to-end configuration to provide a desired length of connected tubular structures 340. The couplings 335 may comprise any form known in the art, including but not limited to flange, threaded, and right angle turns. The couplings 335 can comprise a flange configuration that enables subsequent connections using nuts and bolts. Flange couplings can be integrated into a wound pipe by winding a first sheet metal 120 comprising a first width to form a first inner region 210 of the pipe. In a preferred embodiment, adjacent layers of first sheet metal 120 are welded together during winding of first inner region 210.

The winding process 100 continues until the outside diameter of first inner region 210 of tubular structure 180 is slightly less than the inside diameter of an appropriately selected flange coupling 335. The winding process is paused, first sheet metal 120 is cut off in the cross-machine direction, and two flange couplings 335 are prepared for installation on opposed ends of tubular structure 180. In a non-limiting example, the inside surfaces and the outside surfaces of the coupling 335 hubs are coated with structural adhesive prior to integration into tubular structure 180. A first flange coupling 335 is then placed over a first end of tubular structure 180 and a second flange coupling 335 is placed over the opposed end of tubular structure 180. The outer end face of the first coupling 335 can be aligned in the cross-machine direction with the outer end face of first inner region 210 of tubular structure 180 and the outer end face of the second coupling 335 is aligned in the cross-machine direction with the outer end face of the tubular structure 180 first inner region 210. The first flange coupling 335 can be adhesively bonded to the first end of tubular structure 180 and the second flange coupling 335 is adhesively bonded to the second end of tubular structure 180 to provide the requisite mating and fastening engagement of the respective tubular structures 180.

In a non-limiting example, the flange couplings 335 comprise a hub, wherein the hub comprises an inner diameter that is approximately equal over the entire length of the hub. The hub also comprises an outside diameter that is approximately equal from the inner end face of the hub to the end of the hub that transitions to the integral flange portion of the coupling 335. The flange portion of the coupling 335 comprises a flange thickness and an outside diameter. In a preferred embodiment, the coupling 335 flange outside diameter is greater than the hub outside diameter and the hub outside diameter is greater than the hub inside diameter. After the two couplings 335 are placed on the opposite ends of the tubular structure 180, the first sheet metal 120 width is reduced to a second sheet metal 120J width by laser cutting or other suitable means, wherein the difference between the first sheet metal 120 width and the second sheet metal 120J width is approximately equal to the combined hub lengths of the first and second flange couplings 335. The leading edge of the second sheet metal 120J is then welded to the outer layer of the first inner region 210 of the tubular structure 180. Winding is then resumed to form the second region 215 of the tubular structure 180. In a preferred embodiment, the adjacent layers of the second sheet metal 120J are welded together during the winding of the second region 215 of the tubular structure 180.

In another preferred embodiment, both edges of second sheet metal 120J in each layer of second region 215 of tubular structure 180 are adjacent to the hub inner end faces of the first and second flange couplings 335. The winding process continues until the diameter of the second region 215 is approximately equal to the hub outside diameter of the two flange couplings 335. The winding process is then paused and second sheet metal 120J is cut off in the cross-machine direction. The sheet metal 120 width is then increased to a third sheet metal width 120K by laser cutting or other suitable means, wherein the difference between the first sheet metal 120 width and the third sheet metal 120K width is approximately equal to the combined thicknesses of the flange portions of the two couplings 335 installed on opposed ends of tubular structure 180. The leading edge 175 of sheet metal 120K is then welded to the outer layer of second region 215 of tubular structure 180. Winding is then resumed to form third region 220 of tubular structure 180. The first layer of the third region 220 overlies the outer surface of both the first and second flange coupling 335 hubs, which comprise adhesive previously applied, and the outer layer of second region 215. The third region 220 of the tubular structure 180 is thus adhesively bonded to the first flange coupling 335 and second flange coupling 335. In a preferred embodiment, adjacent layers of third sheet metal 120K can be welded together during the winding of third region 220 of tubular structure 180.

In another embodiment, both edges of third sheet metal 120K in each layer of third region 220 of tubular structure 180 are adjacent to the flange inner end faces of first and second flange couplings 335. The winding process continues until the diameter of third region 220 is approximately equal to the desired target tubular structure 180 outside diameter, at which point the winding process is terminated and third sheet metal 120K is cut off in the cross-machine direction.

The diameter of the flange bolt holes is sufficiently greater than the outside diameter of the tubular structure 180 to allow easy installation of nuts and bolts through the coupling 335 flanges to join adjacent tubular structures 180 and form a desired length of connected tubular structures 340. Other types of couplings 335 may be similarly integrated into wound tubular structures 180 or other tubular structures 180 by making manufacturing modifications as known by one of skill in the art. Other couplings 335 may provide connections for adjacent tubular structures 180 wherein the longitudinal axes 235 of the two tubular structures 180 are aligned. Alternatively, other couplings 335 may provide connections for adjacent tubular structures 180 wherein the longitudinal axis of a first tubular structure 180 is orthogonal to the longitudinal axis of a second connected tubular structure 180. This manufacturing method reduces or eliminates secondary fabrication processes related to the integration of couplings 335, such as separate welding operations, which are often effort intensive and costly.

Use of Common Couplings for Extended Lengths of Tubular Structures

Referring to FIG. 10, a desired length of connected tubular structures 340 may be produced by sequentially winding tubular structures 180 onto opposite ends of couplings 335, wherein the first end of a first coupling 335 is integrated into a first wound tubular structure 180 and the second end of the first coupling 335 is integrated into a second wound tubular structure 180 to matingly and fasteningly engage a first wound tubular structure 180 and a second wound tubular structure 180. In other words, the mating and fastening engagement of the first end of the first tubular structure 180 and the first end of the second tubular structure 180 can provide for the first longitudinal axis of a first wound tubular structure 180 and the second longitudinal axis of a second wound tubular structure 180 to be collectively elongate. This method eliminates much of the effort required to connect tubular structures 180 after manufacturing is complete, such as the previous example of flange couplings 335 comprising nut and bolt fasteners. The first coupling 335 can be fixably and matingly attached to a first end of the a first wound tubular structure 180 and a first end of a second wound tubular structure 180 by bonding the first coupling to the first end of the a first wound tubular structure 180 and a first end of a second wound tubular structure 180 or to the sheet meal 120 forming first wound tubular structure 180 and second wound tubular structure 180. Such bonding to provide sufficient mating and fastening engagement can be selected from the group consisting of friction bonding, compressive bonding, adhesive bonding, welding, combinations thereof or by any other technique known to one of skill in the art of bonding metals and other materials.

Further, the first coupling 335 disposed between the first end of said first wound tubular structure 180 and said first end of the second tubular structure 180 can be provided with a desired bend modulus. Providing the first coupling 335 with a suitable bend modulus can provide sufficient flexure to facilitate the mating and fastening engagement of the first end of the first tubular structure 180 and the first end of the second tubular structure 180 when the first longitudinal axis and the second longitudinal axis are not collectively elongate. Such flexure can be incorporated into first coupling 335 as strict flexure (i.e., first coupling 335 bends) or by rotation (i.e., first coupling 335 is provided with an axis of rotation - either linear or off-set), combinations thereof, and the like.

In one embodiment, common couplings 335 can be integrated into the production of tubular structures 180 to enable joining the structures in an end-to-end configuration mating and fastening engagement within the manufacturing environment. Common couplings 335 may comprise a center flange portion and hubs that extend outward from both sides of the center flange. Common couplings 335 comprise a center flange outer first diameter, a hub outer middle diameter, a hub inner third diameter, and a center flange inner fourth diameter.

In a preferred embodiment, the center flange outer first diameter is greater than the hub outer middle diameter, the hub outer diameter is greater than the hub inner third diameter, and the hub inner third diameter is greater than the center flange inside fourth diameter. For example, the center flange thickness of the center flange annular region disposed radially inside the hub portion of the coupling 335 is approximately equal to the center flange thickness of the center flange annular region disposed radially outside the hub portion of the coupling 335. To produce a first tubular structure 180, a first common coupling 335 may be integrated into a wound tubular structure 180 by winding a first sheet metal 120 comprising a first width to form a first inner region 210 of the first tubular structure 180. In a preferred embodiment, the adjacent layers of first sheet metal 120 are welded together during the winding of the first inner region of the first tubular structure 180. The winding process continues until the outside diameter of first inner region 210 of the first pipe is slightly less than the common coupling 335 hub inner third diameter. The winding process 100 is paused, first sheet metal 120 is cut off in the cross machine direction, and first common coupling 335 is prepared for installation on a first end of first tubular structure 180.

In a non-limiting example, the inside surfaces and the outside surfaces of a first end of the first common coupling 335 hub are coated with structural adhesive prior to integration into the first tubular structure 180. The first common coupling is then placed over a first end of the first tubular structure 180 where it becomes adhesively bonded to the first inner region of the first tubular structure 180. In a preferred embodiment, the innermost face of the center flange is positioned adjacent the end face of the wound first inner region 210 of the first tubular structure 180. After the common coupling 335 is placed on the first end of the first inner region 210 of the first tubular structure 180, first sheet metal 120 width is reduced to a second sheet metal 120J width by laser cutting or other suitable means, wherein the difference between the first sheet metal 120 width and the second sheet metal 120J width is approximately equal to the length of the first common coupling 335 hub portion that overlies first inner region 210 of wound first tubular structure 180. The leading edge of sheet metal 120J is then welded to the outer layer of first inner region 210 of first tubular structure 180. Winding is then resumed to form second region 215 of first tubular structure 180. In a preferred embodiment, adjacent layers of second sheet metal 120J are welded together during the winding of second region 215 of first tubular structure 180.

In another preferred embodiment, the edge of sheet metal 120J in each layer of second region 215 of first tubular structure 180 closest to common coupling 335 are adjacent to the common coupling 335 hub inner end face. The winding process 100 continues until the diameter of second region 215 is approximately equal to the hub outside second diameter. The winding process 100 is then paused and sheet metal 120J is cut off in the cross machine direction. The sheet metal 120J width is then increased to first sheet metal 120 width. The leading edge 175 of sheet metal 120 is then welded to the outer layer of second region 215 of tubular structure 180. Winding is then resumed to form third region 220 of tubular structure 180. The first layer of third region 220 overlies the outer surface of the common coupling 335 hub, which comprises adhesive previously applied, and the outer layer of second region 215. The third region 220 of tubular structure 180 is adhesively bonded to common coupling 335.

In another embodiment, adjacent layers of first sheet metal 120 are welded together during the winding of third region 220 of tubular structure 180. The edges of sheet metal 120 in each layer of third region 220 of tubular structure 180 closest to common coupling 335 are adjacent to the center flange's inner end face. The winding process continues until the diameter of outer third region 220 is approximately equal to the desired target first tubular structure 180 outside diameter, at which point the winding process 100 is terminated and sheet metal 120 is cut off in the cross machine direction. The outer diameter of the first tubular structure 180 third region 220 can be approximately equal to the center flange outer first diameter. This method provides means to integrate the first end of a common coupling 335 within a first wound tubular structure 180.

After the above common coupling 335 integration process is completed, the wound first tubular structure 180 may be removed from mandrel 160 and moved to a suitable cross machine position to not interfere with succeeding winding operations 100. In a preferred embodiment, first tubular structure 180 is supported by two rollers spaced apart underneath first tubular structure 180 and positioned to maintain alignment between the winding mandrel 160 longitudinal axis and the first tubular structure 180 longitudinal axis 235. In a preferred embodiment, the rollers are connected to a motor and may be driven at the same rotational speed as winding mandrel 160. A second tubular structure 180 is subsequently wound with first sheet metal 120 comprising the first width to form a first inner region 210 of the second pipe like the process to form the first tubular structure 180 described *supra*. When the first inner region 210 of the second tubular structure 180 section is slightly less than the common coupling 335 hub inner third diameter, the winding process is paused, and the first common coupling integrated within the first tubular structure 180 is prepared for installation on a first end of the second tubular structure 180. In a non-limiting example, the inside surfaces and the outside surfaces of the second end of the first common coupling 335 hub are coated with structural adhesive prior to integration into the second tubular structure 180. The first tubular structure 180, comprising the common coupling 335, is moved in the cross machine to place the second end of the common coupling 335 hub over the first end of the first inner region 210 of second tubular structure 180. The second end of the common coupling 335 hub becomes adhesively bonded to first inner region 210 of the second tubular structure 180.

In a preferred embodiment, the innermost face of the common coupling 335 center flange is positioned adjacent the end face of the wound first inner region 210 of the second tubular structure 180. After the common coupling 335 is placed on the first end of the first inner region 210 of the second tubular structure 180, the first sheet metal 120 width is reduced to a second sheet metal 120J and winding is then resumed to form second region 215 of the second tubular structure 180. The winding process 100 continues until the diameter of the second region 215 of the second tubular structure 180 is approximately equal to the hub outside second diameter. The winding process is then paused, sheet metal 120J width is then increased to the first sheet metal 120 width and welded to the outer layer of second region 215 of the second tubular structure 180. Winding is then resumed to form the third region 220 of the second tubular structure 180.

The winding process 100 continues until the diameter of the third region 220 of the second tubular structure 180 is approximately equal to the desired target second tubular structure 180 outside diameter, typically equal to the desired target first tubular structure 180 outside diameter. The winding process is stopped and sheet metal 120 is cut off in the cross machine direction.

This method provides means to integrate the second end of the common coupling 335 within a second tubular structure 180, thereby joining the first tubular structure 180, comprising the first end of the common coupling 335, to a second tubular structure 180, within the manufacturing environment. This method may be repeated as many times as desired to join two or more tubular structures 180 together within the manufacturing environment and produce a desired length of connected tubular structures 340.

Further, a desired length of angularly related and connected tubular structures 340 may be produced by sequentially winding tubular structures 180 onto opposite ends of couplings 335, wherein the first end of a first coupling 335 is integrated into a first wound tubular structure 180 and the second end of the first coupling 335 is integrated into a second wound tubular structure 180 to matingly and fasteningly engage a first wound tubular structure 180 and a second wound tubular structure 180 where the first longitudinal axis of a first tubular structure 180 is angularly disposed relative to the first longitudinal axis of a first tubular structure 180. In other words, the mating and fastening engagement of the first end of the first tubular structure 180 and the first end of the second tubular structure 180 can provide for the first longitudinal axis of a first wound tubular structure 180 and the second longitudinal axis of a second wound tubular structure 180 are angularly disposed relative to each other. For example, it may be desirable to provide a matingly and fasteningly engaged first wound tubular structure 180 disposed orthogonal from a second wound tubular structure 180.

Other types of couplings 335 may be similarly integrated into tubular structures 180 by making manufacturing modifications as known by one of skill in the art. This manufacturing method may reduce or eliminate secondary fabrication processes related to the integration of couplings 335, such as a separate welding operation, which are often effort intensive and costly.

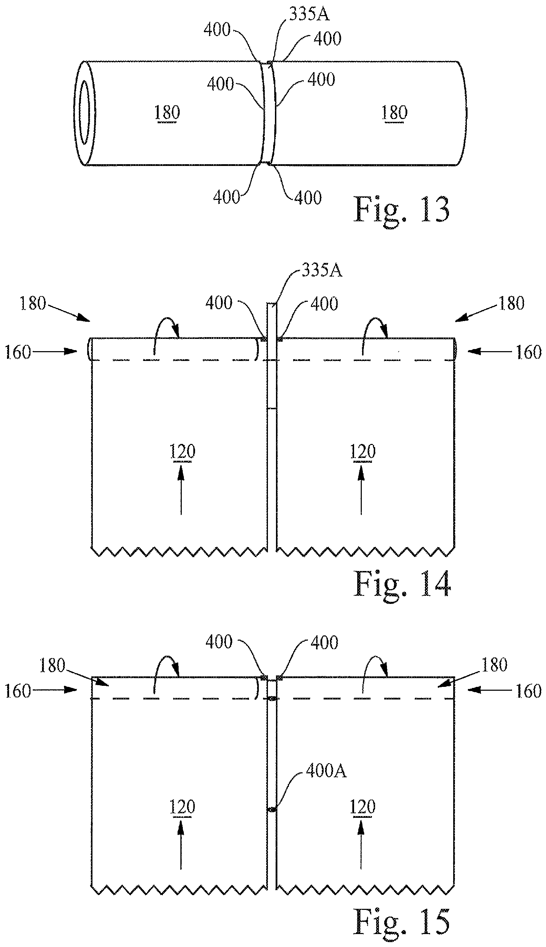

As shown in FIG. 13, for example, a coupling 335A having a disk-like shape (e.g., wafer or washer shaped) can be integrated into a tubular structure 180. In one embodiment, coupling 335A can be matingly and fastenably attached at attachment abutments 400 after the formation of first wound tubular structure 180 and second wound tubular structure 180. Attachment abutments 400 can comprise a weld seam or adhesive connection between a respective tubular structure 180 and coupling 335A.

Alternatively, a disk-like shaped coupling 335A can be integrated directly into the manufacturing process for the formation of a tubular structure 180. For example, as tubular structure 180 is being wound about a mandrel 160, an attachment abutment 400 can be formed between an edge of the sheet material 120 forming tubular structure 180 and the coupling 335A. The attachment abutment 400 can be formed by welding or adhesively connecting the edge of sheet metal 120 forming tubular structure 180 and coupling 335A as sheet metal 120 is being disposed about mandrel 160 rotating about its longitudinal axis. Without desiring to be bound by theory, it is believed that such *in situ* formation of the attachment abutment 400 between the edge of sheet metal 120 forming tubular structure 180 and coupling 335A can accommodate any material inconsistencies in the edge of sheet metal 120 that could cause anything but a complete end of tubular structure that is completely orthogonal to the longitudinal axis of mandrel 160. In other words, any deviation in the distance between the sheet metal forming the end of tubular structure 180 and coupling 335A can be accounted for by the mating and fixable attachment of the edge of the sheet metal 120 forming the end of tubular structure 180 and coupling 335A by the presentation of a welded or adhesive attachment therebetween. Such mating and fastening attachment using coupling 335A can form an elongate tubular structure.

Alternatively still, as shown in FIG. 15, an elongate tubular structure can be formed from a pair of tubular structures 180 disposed end-to-end and formed from the parallel infeed of sheet metal 120 toward mandrel 160. Here, opposed ends of the respective sheet metal 120 can be matingly and fixedly attached by attachment abutments 400. As shown, attachment abutments 400 can be provided during the winding process for the formation of each respective tubular structure 180 to directly attach the respective end of sheet metal 120 disposed adjacent the end of second sheet metal 120 (i.e., directly conjoining respective ends of respective sheet metals 120 to form an elongate tubular structure during the winding process). Alternatively, one of skill in the art may find it useful to provide an attachment abutment 400A to respective ends of respective sheet metals 120 prior to the formation of an elongate wound tubular structure. In this instance, the tubular structure wound will be necessarily the product of two conjoined ends of respective sheet metals 120 prior to entry into the winding process.

"Wandering" Seam for Extended Tube Length Production

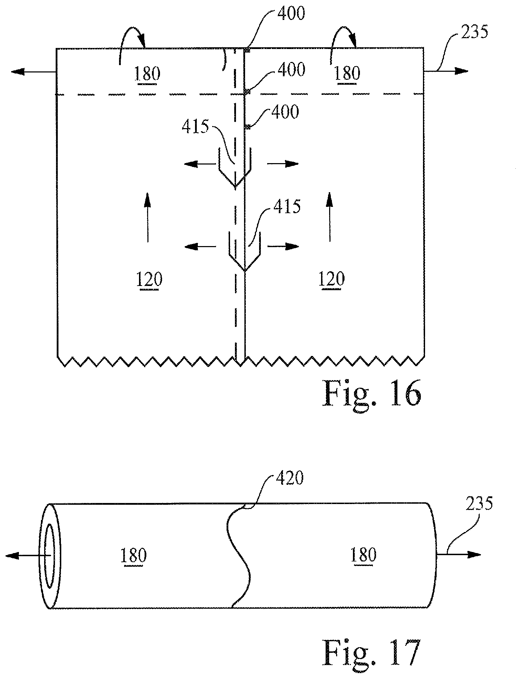

As shown in FIGS. 16-17, a wandering seam (i.e., abutment line 420) can be provided to an elongate tubular structure that is the result of a direct mating and fastening engagement between the respective ends of two tubular structures 180 each formed from a respective sheet metal 120. Here, a portion of each sheet metal 120 can be superimposed upon the other to form an overlap between the adjacently disposed sheet metals 120. A pair of position-adjustable slitters 415 can slit the respective end of each respective sheet metal 120 as each respective sheet metal proceeds toward the winding process to form each respective tubular structure 180 and the resulting matingly and fasteningly engaged elongate tubular structure. As each sheet meal 120 approaches the winding process, each slitter 415 can remove an end portion of the sheet metal 120 cooperatively associated thereto. Ideally, the combination of removed portions of each respective sheet metal 120 provides for a side-by-side placement of an edge of each respective sheet metal that would facilitate the placement of an attachment abutment 400 thereby fasteningly and matingly joining the respective sheet metals 120 and forming an elongate tubular structure.

It can be preferred to provide each slitter 415 with cooperative movement one to the other to facilitate the creating of the mutual side-by-side placement of each edge of the respective sheet metals 120. Without desiring to be bound by theory, it can also be beneficial to affix the position of each slitter 150 relative to each other and to cooperatively move the slitter 150 combination relative to the cross-machine direction relative to the sheet metals 120 to cause the formed side-by-side edge to continuously move in the cross-machine direction. It is believed that this 'wandering' (or 'oscillating') side-by-side edge of each sheet metal 120 and the ensuing development of the attachment abutment 400 to form a 'wandering' abutment line 420 thereto can shift the location of the attachment abutment 400 in each subsequent convolution forming the respective tubular structures 180 and the ensuing elongate tubular structure so that the abutment line 420 is not radially disposed about a single point of the longitudinal axis 235 of the resulting elongate tubular structure. Rather, structural integrity of the attachment abutment 400 and an increase in the bend modulus of the resulting elongate tubular structure can be realized if the cross-machine direction placement of the attachment abutments 400 are all decentralized from a single point on the longitudinal axis 235 of the elongate tubular structure. In other words, the attachment abutments 400 from each respective conjoined ends of a first convolution of each tubular structure 180 can each have a cross-machine direction position on the longitudinal axis 235 of the elongate tubular structure that is different from the cross-machine direction position of a succeeding attachment abutment(s) for a succeeding convolution of each tubular structure 180 that forms the elongate tubular structure. This can form the 'wandering' abutment line 420 shown in FIG. 17.

2-Ply Offset Edge Configurations for Extended Tube Length Production

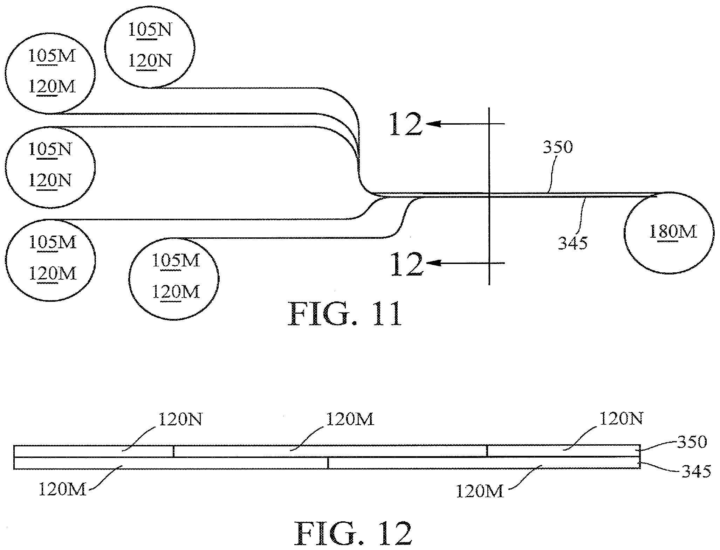

In the embodiment shown in FIGS. 11-12, an extended length tubular structure 180M may be produced by overlapping sheet metals in the cross machine direction prior to winding into tubular structures 180M. This method can eliminate the effort required to connect tubular structures 180M after manufacturing is complete, such as welding tubular structures 180M together in an end-to-end configuration.

For example, five supply coils of sheet metal 105M, 105N are provided to manufacture a tubular structure 180M, wherein all five supply coils 105M, 105N comprise the same material and grade of sheet metal. The first supply coil 105M comprises 304 grade stainless steel sheet metal 120M which is 72 inches wide, the second supply coil 105M comprises 304 grade stainless steel sheet metal 120M which is 72 inches wide, the third supply coil 105N comprises 304 grade stainless steel sheet metal 120N which is 36 inches wide, the fourth supply coil 105M comprises 304 grade stainless steel sheet metal 120M which is 72 inches wide, and the fifth supply coil 105N comprises 304 grade stainless steel sheet metal 120N which is 36 inches wide.

The first sheet metal 120M and the second sheet metal 120M are unwound and conveyed in a side-by-side orientation to provide a total cross machine width of manufactured sheet metal approximately equal to their combined widths, or 144 inches. The third 105N, fourth 105M, and fifth 105N sheet metals are also unwound and conveyed in a side-by-side orientation, with the fourth sheet metal 105M disposed intermediate the third sheet metal 105N and the fifth sheet metal 105N, such that it is in the center position of the three-sheet-metal group. The total cross machine width of manufactured sheet metal for this three-sheet-metal group is also approximately equal to their combined widths, or 144 inches. After unwinding and prior to being rewound to form a tubular structure 180M, adhesive is applied to one side of the first sheet metal 120M and to one side of the second sheet metal 105M. For example, a permeable roll can be used to apply the adhesive in a desired pattern (defined by the aperture pattern in the surface of the permeable roll) to the top face of the first sheet metal 105M and the top face of the second sheet metal 105M as both the sheet metals travel in a near-horizontal plane. The application pattern may be optimized for the desired tubular structure 180M application. Adhesive can be applied in a continuous line at the transverse leading edge of the first and second sheet metals 105M, in continuous lines along both machine direction edges of the first and second sheet metals 105M, in discrete dots spaced apart in regular intervals in both the machine direction and cross machine directions of the first and second sheet metals 105M, and/or in a continuous line at the transverse trailing edge of the first and second sheet metals 105M.

After the adhesive has been applied to first and second sheet metals 105M, the three-sheet-metal group is brought into face-to-face contact with first and second sheet metals 105M such that the adhesive is disposed intermediate first layer 345 of sheet metal 105M, comprising the first and second sheet metals, and the second layer 350 of sheet metal, comprising the third, fourth, and fifth sheet metals, to create a 2-ply laminate. The 2-ply laminate is then attached to the winding mandrel 160, the winding process 100 is initiated, and the winding process 100 continues until the desired wall thickness and exterior dimensions of the tubular structure 180M are attained, at which point the winding process is terminated and all five sheet metals 120M, 120N are cut off in the cross-machine direction. The winding tension and the force exerted by an adjustable pressure roll 170 can provide sufficient pressure to effectively bond the first 345 and second 350 layers via adhesive bonding. For example, each 2-ply laminate layer can comprise two plies of adhesively bonded sheet metal, and each 2-ply laminate layer within tubular structure 180M can be joined to the underlying 2-ply laminate layer within wound tubular structure 180M by laser welding.

In a preferred embodiment, the widths and relative orientation of the constituent sheet metals for tubular structure 180M are selected to ensure the machine direction sheet metal edges within the first ply of a 2-ply laminate layer do not overlie, nor are the machine direction edges in proximity to, the machine direction sheet metal edges within the second ply of the 2-ply laminate. Such alignment of, or proximity of, machine direction edges in adjacent layers may produce overlying areas of reduced strength, thereby weakening the wound tubular structure 180M or providing a path for leakage from the interior of the tubular structure 180M. In the non-limiting example above, the machine direction edges in first layer 345 of sheet metal in the 2-ply laminate are approximately 72 inches from a first end of tubular structure 180M and the machine direction edges in second layer 350 of the 2-ply laminate are approximately 36 inches and 108 inches from the first end of tubular structure 180M. This significant difference in the cross-machine positions of the machine direction edges of the first 345 and second 350 layers within the 2-ply laminate can provide the desired structural integrity and leak-proof construction targets for tubular structure 180M.

This method can provide the capability to produce a wide range of tubular structure 180M lengths, including tubular structure 180M lengths substantially greater than the individual widths of constituent sheet metals 120M, 120N.

Any dimensions and/or values disclosed herein are not to be understood as being strictly limited to the exact numerical values recited. Instead, unless otherwise specified, each such dimension and/or value is intended to mean both the recited dimension and/or value and a functionally equivalent range surrounding that dimension and/or value. For example, a dimension disclosed as "40 mm" is intended to mean "about 40 mm."

While particular embodiments of the present invention have been illustrated and described, it would be obvious to those skilled in the art that various other changes and modifications can be made as long as they fall within the scope of the appended claims.

**Claims**

1. An elongate tubular structure comprising:

   a) a first tubular structure (180) comprising: of

   1) a first sheet metal (120) having a machine direction and a width, said first sheet metal (120) being continuously and convolutely wound about a first longitudinal axis forming a plurality of convolution layers, wherein the convolution layers are adhesively bonded using structural adhesives; and wherein said first tubular structure (180) comprises a net structural density substantially less than the density of said first sheet metal (120); and said first sheet metal (120) having a tail portion; and,
   2) wherein said tail portion of said first sheet metal (120) is disposed upon and bonded by a structural adhesive to an immediately subjacent convolution of said first sheet metal (120) along said width to form said first tubular structure (180);

   b) a second tubular structure (180) comprising:

   1) a second sheet metal (120) being convolutely wound about a second longitudinal axis, said second sheet metal (120) having a tail portion; and,
   2) wherein said tail portion of said second sheet metal (120) is disposed upon and adhesively bonded using structural adhesive to an immediately subjacent convolution of said second sheet metal (120) to form said second tubular structure (180); and,

   e) wherein a first end of said first tubular structure (180) is matingly and fasteningly engaged to a first end of said second tubular structure (180).

2. The elongate tubular structure of Claim 1 further **characterized in that** said first end of said first tubular structure (180) is welded to said first end of said second tubular structure (180).

3. The elongate tubular structure of claim 1 further **characterized by** a first coupling disposed between said first end of said first tubular structure (180) and said first end of said second tubular structure (180), said first coupling being matingly and fasteningly engaged to said first end of said first tubular structure (180) and said first coupling being matingly and fasteningly engaged to said first end of said second tubular structure (180).

4. The elongate tubular structure of Claim 3 further **characterized in that** said first longitudinal axis and said second longitudinal axis are collectively elongate.

5. The elongate tubular structure of Claim 3 further **characterized in that** said first longitudinal axis and said second longitudinal axis are angularly disposed relative to each other.

6. The elongate tubular structure of Claim 5 further **characterized in that** said first longitudinal axis and said second longitudinal axis are disposed orthogonal relative to each other.

7. The elongate tubular structure of Claim 3 further **characterized in that** said first tubular structure (180) is further **characterized by**:

   3) a third sheet metal having a machine direction and adhesively bonded using structural adhesive to a last convolution of said first sheet metal (120);
   4) said third sheet metal being convolutely wound about said convolutely wound first sheet metal (120) coaxial with said first longitudinal axis;
   5) further **characterized in that** said third sheet metal has a tail portion; and,
   6) further **characterized in that** said tail portion of said third sheet metal is disposed upon and adhesively bonded using structural adhesive to an immediately subjacent convolution of said third sheet metal.

8. The elongate tubular structure of Claim 7 further **characterized in that** said second tubular structure (180) is further **characterized by**:

   3) a fourth sheet metal having a machine direction and adhesively bonded using structural adhesive to a last convolution of said second sheet metal (120);

4) said fourth sheet metal being convolutely wound about said convolutely wound second sheet metal (120) coaxial with said second longitudinal axis;

5) further **characterized in that** said fourth sheet metal has a tail portion; and,

6) further **characterized in that** said tail portion of said fourth sheet metal is disposed upon and adhesively bonded using structural adhesive to an immediately subjacent convolution of said fourth sheet metal.

9. The elongate tubular structure of Claim 8 further **characterized in that** said second tubular structure (180) is further **characterized by**:

7) a fifth sheet metal having a machine direction and adhesively bonded using structural adhesive to a last convolution of said fourth sheet metal;

8) said fifth sheet metal being convolutely wound about said convolutely wound second and fourth sheet metals coaxial with said second longitudinal axis;

9) further **characterized in that** said fifth sheet metal has a tail portion; and,

1O) further **characterized in that** said tail portion of said fifth sheet metal is disposed upon and adhesively bonded using structural adhesive to an immediately subjacent convolution of said fifth sheet metal.

10. The elongate tubular structure of Claim 7 further **characterized in that** said first sheet metal (120) and said third sheet metal are different.

11. The elongate tubular structure of Claim 7 further **characterized in that** said first tubular structure (180) is further **characterized by**:

7) a fourth sheet metal having a machine direction and adhesively bonded using structural adhesive to a last convolution of said third sheet metal;

8) said fourth sheet metal being convolutely wound about said convolutely wound first and third sheet metals coaxial with said first longitudinal axis;

9) further **characterized in that** said fourth sheet metal has a tail portion; and,

1O) further **characterized in that** said tail portion of said fourth sheet metal is disposed upon and adhesively bonded using structural adhesive to an immediately subjacent convolution of said fourth sheet metal.

12. The elongate tubular structure of Claim 11 further **characterized in that** said first sheet metal (120) and said fourth sheet metal are the same.

13. The elongate tubular structure of Claim 3 further **characterized in that** said first coupling is bonded to said first end of said first tubular structure (180) and said first end of said second tubular structure (180).

14. The elongate tubular structure of Claim 13 further **characterized in that** said bonding is selected from the group consisting of friction bonding, compression bonding, adhesive bonding, welding, and combinations thereof.

15. The elongate tubular structure of any of the previous Claims further **characterized in that** a surface of said first sheet metal (120) disposed proximate to said first longitudinal axis has enhanced surface properties, said enhanced surface properties being provided by a process selected from the group consisting of chemical treatments, polishing, sanding, and combinations thereof.

**Patentansprüche**

1. Langgestreckte rohrförmige Struktur umfassend:

a) eine erste rohrförmige Struktur (180) umfassend:

1) ein erstes Metallblech (120), das eine Maschinenrichtung und eine Breite hat, wobei das erste Metallblech (120) fortlaufend und spiralig um eine erste Längsachse gewickelt ist, wobei eine Vielzahl von spiraligen Schichten gebildet wird, wobei die spiraligen Schichten unter Verwendung von strukturellen Klebstoffen durch Kleben verbunden sind; und wobei die erste rohrförmige Struktur (180) eine strukturelle Nettodichte aufweist, die wesentlich geringer als die Dichte des ersten Metallbleches (120) ist; und das erste Metallblech (120) einen Endabschnitt hat; und,

2) wobei der Endabschnitt des ersten Metallbleches (120) auf einer unmittelbar darunterliegenden Windung des ersten Metallbleches(120) entlang der Breite angeordnet und mittels eines strukturellen Klebstoffes daran befestigt ist, um die erste rohrförmige Struktur(180) zu bilden;

b) eine zweite rohrförmige Struktur (180) umfassend:

1) ein zweites Metallblech (120), das um eine zweite Längsachse spiralig gewickelt ist, wobei das zweite Metallblech (120) einen Endabschnitt hat; und,

2) wobei der Endabschnitt des zweiten Metallbleches (120) auf einer unmittelbar darunterliegenden Windung des zweiten Metallbleches(120) angeordnet und mittels strukturellem Klebstoff daran festgeklebt ist, um die zweite rohrförmige Struktur (180) zu bilden;und,c) wobei ein erstes Ende der ersten rohrförmigen Struktur (180) mit einem ersten Ende der zweiten rohrförmigen Struktur (180) zusammenpassend und fest verbunden ist.

2. Langgestreckte rohrförmige Struktur nach Anspruch 1, ferner **dadurch gekennzeichnet, dass** das erste Ende der ersten rohrförmigen Struktur (180)mit dem ersten Ende der zweiten rohrförmigen Struktur (180) verschweißt ist.

3. Langgestreckte rohrförmige Struktur nach Anspruch 1, ferner **gekennzeichnet durch** eine erste Kupplung, die zwischen dem ersten Ende der ersten rohrförmigen Struktur (180)und dem ersten Ende der zweiten rohrförmigen Struktur (180)angeordnet ist, wobei die erste Kupplung mit dem ersten Ende der ersten rohrförmigen Struktur (180) zusammenpassend und fest verbunden ist und die erste Kupplung mit dem ersten Ende der zweiten rohrförmigen Struktur (180)zusammenpassend und fest verbunden ist.

4. Langgestreckte rohrförmige Struktur nach Anspruch 3, ferner **dadurch gekennzeichnet, dass** die erste Längsachse und die zweite Längsachse gemeinsam verlängert sind.

5. Langgestreckte rohrförmige Struktur nach Anspruch 3, ferner **dadurch gekennzeichnet, dass** die erste Längsachse und die zweite Längsachse in einem Winkel relativ zueinander angeordnet sind.

6. Langgestreckte rohrförmige Struktur nach Anspruch 5, ferner **dadurch gekennzeichnet, dass** die erste Längsachse und die zweite Längsachse orthogonal zueinander angeordnet sind.

7. Langgestreckte rohrförmige Struktur nach Anspruch 3, ferner **dadurch gekennzeichnet, dass** die erste rohrförmige Struktur (180) ferner **gekennzeichnet ist durch**:

3) ein drittes Metallblech, das eine Maschinenrichtung hat und unter Verwendung von strukturellem Klebstoff an einer letzten Windung des ersten Metallbleches (120) festgeklebt ist;

4) wobei das dritte Metallblech spiralig um das spiralig gewickelte erste Metallblech (120) koaxial zu der ersten Längsachse gewickelt ist;

5) ferner **dadurch gekennzeichnet, dass** das dritte Metallblech einen Endabschnitt hat; und,

6) ferner **dadurch gekennzeichnet, dass** der Endabschnitt des dritten Metallbleches auf einer unmittelbar darunterliegenden Windung des dritten Metallbleches angeordnet und unter Verwendung von strukturellem Klebstoff daran festgeklebt ist.

8. Langgestreckte rohrförmige Struktur nach Anspruch 7, ferner **dadurch gekennzeichnet, dass** die zweite rohrförmige Struktur (180) ferner **gekennzeichnet ist durch**:

3) ein viertes Metallblech, das eine Maschinenrichtung hat und unter Verwendung von strukturellem Klebstoff an einer letzten Windung des zweiten Metallbleches (120) festgeklebt ist;

4) wobei das vierte Metallblech spiralig um das spiralig gewickelte zweite Metallblech (120) koaxial zu der zweiten Längsachse gewickelt ist;

5) ferner **dadurch gekennzeichnet, dass** das vierte Metallblech einen Endabschnitt hat; und,

6) ferner **dadurch gekennzeichnet, dass** der Endabschnitt des vierten Metallbleches auf einer unmittelbar darunterliegenden Windung des vierten Metallbleches angeordnet und unter Verwendung von strukturellem Klebstoff daran festgeklebt ist.

9. Langgestreckte rohrförmige Struktur nach Anspruch 8, ferner **dadurch gekennzeichnet, dass** die zweite rohrförmige Struktur (180) ferner **gekennzeichnet ist durch**:

7) ein fünftes Metallblech, das eine Maschinenrichtung hat und unter Verwendung von strukturellem Klebstoff an einer letzten Windung des vierten Metallbleches (120) festgeklebt ist;

8) wobei das fünfte Metallblech spiralig um das jeweils spiralig gewickelte zweite und vierte Metallblech (120) koaxial zu der zweiten Längsachse gewickelt ist;

9) ferner **dadurch gekennzeichnet, dass** das fünfte Metallblech einen Endabschnitt hat; und,

10) ferner **dadurch gekennzeichnet, dass** der Endabschnitt des fünften Metallbleches auf einer unmittelbar darunterliegenden Windung des fünften Metallbleches angeordnet und unter Verwendung von strukturellem Klebstoff daran festgeklebt ist.

10. Langgestreckte rohrförmige Struktur nach Anspruch 7, ferner **dadurch gekennzeichnet, dass** das erste Metallblech (120) und das dritte Metallblech verschieden sind.

11. Langgestreckte rohrförmige Struktur nach Anspruch 7, ferner **dadurch gekennzeichnet, dass** die erste rohrförmige Struktur (180) ferner **gekennzeichnet ist durch**:

7) ein viertes Metallblech, das eine Maschinenrichtung hat und unter Verwendung von strukturellem Klebstoff an einer letzten Windung des dritten Metallbleches (120) festgeklebt ist;

8) wobei das vierte Metallblech spiralig um das jeweils spiralig gewickelte erste und dritte Metallblech koaxial zu der ersten Längsachse gewickelt ist;

9) ferner **dadurch gekennzeichnet, dass** das vierte Metallblech einen Endabschnitt hat; und,

10) ferner **dadurch gekennzeichnet, dass** der Endabschnitt des vierten Metallbleches auf einer unmittelbar darunterliegenden Windung des vierten Metallbleches angeordnet und unter Verwendung von strukturellem Klebstoff daran festgeklebt ist.

12. Langgestreckte rohrförmige Struktur nach Anspruch 11, ferner **dadurch gekennzeichnet, dass** das erste Metallblech (120) und das vierte Metallblech (120) die gleichen sind.

13. Langgestreckte rohrförmige Struktur nach Anspruch 3, ferner **dadurch gekennzeichnet, dass** die erste Kupplung mit dem ersten Ende der ersten rohrförmigen Struktur (180) und dem ersten Ende der zweiten rohrförmigen Struktur (180) verbunden ist.

14. Langgestreckte rohrförmige Struktur nach Anspruch 13, ferner **dadurch gekennzeichnet, dass** das Verbinden aus der Gruppe bestehend aus Reibverbinden, Druckverbinden, Verbinden durch Kleben, Schweißen und Kombinationen daraus ausgewählt ist.

15. Langgestreckte rohrförmige Struktur nach irgendeinem der vorhergehenden Ansprüche, ferner **dadurch gekennzeichnet, dass** eine in der Nähe der ersten Längsachse angeordnete Oberfläche des ersten Metallbleches (120) gesteigerte Oberflächeneigenschaften hat, wobei die gesteigerten Oberflächeneigenschaften durch ein Verfahren bereitgestellt sind, das aus der Gruppe bestehend aus chemischen Behandlungen, Polieren, Schleifen und Kombinationen daraus ausgewählt ist.

**Revendications**

1. Structure tubulaire allongée comprenant :

a) une première structure tubulaire (180) comprenant :

1) une première tôle (120) ayant un sens machine et une largeur, ladite première tôle (120) étant enroulée de manière continue et convolutive autour d'un premier axe longitudinal en formant une pluralité de couches de convolution, les couches de convolution étant liées par adhérence à l'aide d'adhésifs structurels ; et ladite première structure tubulaire (180) comprenant une densité structurelle nette sensiblement inférieure à la densité de ladite première tôle (120) ; et ladite première tôle (120) comportant une partie arrière ; et,

2) ladite partie arrière de ladite première tôle (120) étant disposée sur et liée par un adhésif structurel à une convolution immédiatement sous-jacente de ladite première tôle (120) le long de ladite largeur pour former ladite première structure tubulaire (180) ;

b) une seconde structure tubulaire (180) comprenant :

1) une seconde tôle (120) enroulée de manière convolutive autour d'un second axe longitudinal, ladite seconde tôle (120) comportant une partie arrière ; et,

2) ladite partie arrière de ladite seconde tôle (120) étant disposée sur et liée par adhérence à l'aide d'un adhésif structurel à une convolution immédiatement sous-jacente de ladite seconde tôle (120) pour former ladite seconde structure tubulaire (180) ; et,

e) une première extrémité de ladite première structure tubulaire (180) étant engagée de manière complémentaire et fixe à une première extrémité de ladite seconde structure tubulaire (180).

2. Structure tubulaire allongée selon la revendication 1, **caractérisée en outre en ce que** ladite première extrémité de ladite première structure tubulaire (180) est soudée à ladite première extrémité de ladite seconde structure tubulaire (180).

3. Structure tubulaire allongée selon la revendication 1, **caractérisée en outre par** un premier accouplement disposé entre ladite première extrémité de ladite première structure tubulaire (180) et ladite première extrémité de ladite seconde structure tubulaire (180), ledit premier accouplement étant engagé de manière complémentaire et fixe à ladite première extrémité de ladite première structure tubulaire (180) et ledit premier accouplement étant engagé de manière complémentaire et fixe à ladite première extrémité de ladite seconde structure tubulaire (180).

4. Structure tubulaire allongée selon la revendication 3, **caractérisée en outre en ce que** ledit premier axe longitudinal et ledit second axe longitudinal sont collectivement allongés.

5. Structure tubulaire allongée selon la revendication 3, **caractérisée en outre en ce que** ledit premier axe longitudinal et ledit second axe longitudinal sont disposés angulairement l'un par rapport à l'autre.

6. Structure tubulaire allongée selon la revendication 5, **caractérisée en outre en ce que** ledit premier axe longitudinal et ledit deuxième axe longitudinal sont disposés orthogonalement l'un par rapport à l'autre.

7. Structure tubulaire allongée selon la revendication 3, **caractérisée en outre en ce que** ladite première structure tubulaire (180) est en outre **caractérisée par** :

3) une troisième tôle ayant une direction machine et liée par adhérence à l'aide d'adhésif structurel à une dernière convolution de ladite première tôle (120) ;

4) ladite troisième tôle étant enroulée de manière convolutive autour de ladite première tôle (120) enroulée de manière convolutive de manière coaxiale audit premier axe longitudinal ;

5) **caractérisée en outre en ce que** ladite troisième tôle a une partie arrière ; et,

6) **caractérisée en outre en ce que** ladite partie arrière de ladite troisième tôle est disposée sur et liée par adhérence à l'aide d'adhésif structurel à une convolution immédiatement sous-jacente de ladite troisième tôle.

8. Structure tubulaire allongée selon la revendication 7, **caractérisée en outre en ce que** ladite deuxième structure tubulaire (180) est en outre **caractérisée par** :

3) une quatrième tôle ayant une direction machine et liée par adhérence à l'aide d'adhésif structurel à une dernière circonvolution de ladite deuxième tôle (120) ;

4) ladite quatrième tôle étant enroulée de manière convolutive autour de ladite deuxième tôle (120) enroulée de manière convolutive de manière coaxiale audit deuxième axe longitudinal ;

5) **caractérisée en outre en ce que** ladite quatrième tôle a une partie arrière ; et

6) **caractérisée en outre en ce que** ladite partie arrière de ladite quatrième tôle est disposée sur et liée par adhérence à l'aide d'un adhésif structurel sur une convolution immédiatement sous-jacente de ladite quatrième tôle.

9. Structure tubulaire allongée selon la revendication 8, **caractérisée en outre en ce que** ladite seconde structure tubulaire (180) est en outre **caractérisée par** :

7) une cinquième tôle ayant une direction machine et liée par adhérence à l'aide d'un adhésif structurel à une dernière convolution de ladite quatrième tôle ;

8) ladite cinquième tôle étant enroulée de manière convolutive autour desdites deuxième et quatrième tôles enroulées de manière convolutive de manière coaxiale audit second axe longitudinal ;

9) **caractérisée en outre en ce que** ladite cinquième tôle a une partie arrière ; et

10) **caractérisée en outre en ce que** ladite partie arrière de ladite cinquième tôle est disposée sur et liée par adhérence à l'aide d'un adhésif structurel à une convolution immédiatement sous-jacente de ladite cinquième tôle.

10. Structure tubulaire allongée selon la revendication 7, **caractérisée en outre en ce que** ladite première tôle (120) et ladite troisième tôle sont différentes.

11. Structure tubulaire allongée selon la revendication 7, **caractérisée en outre en ce que** ladite première structure tubulaire (180) est en outre **caractérisée par** :

7) une quatrième tôle ayant une direction machine et liée par adhérence à l'aide d'un adhésif structurel à une dernière convolution de ladite troisième tôle ;

8) ladite quatrième tôle étant enroulée de manière convolutive autour desdites première et troisième tôles enroulées de manière convolutive de manière coaxiale audit premier axe longitudinal ;

9) **caractérisée en outre en ce que** ladite quatrième tôle a une partie arrière ; et,

10) **caractérisée en outre en ce que** ladite partie arrière de ladite quatrième tôle est disposée sur et liée par adhérence à l'aide d'un adhésif structurel à une convolution immédiatement sous-jacente de ladite quatrième tôle.

12. Structure tubulaire allongée selon la revendication 11, **caractérisée en outre en ce que** ladite première tôle (120) et ladite quatrième tôle sont identiques.

13. Structure tubulaire allongée selon la revendication 3, **caractérisée en outre en ce que** ledit premier couplage est lié à ladite première extrémité de ladite première structure tubulaire (180) et à ladite première extrémité de ladite seconde structure tubulaire (180).

14. Structure tubulaire allongée selon la revendication 13, **caractérisée en outre en ce que** ladite liaison est choisie dans le groupe constitué par la liaison par friction, la liaison par compression, la liaison adhésive, le soudage et leurs combinaisons.

15. Structure tubulaire allongée selon l'une quelconque des revendications précédentes, **caractérisée en outre en ce qu'**une surface de ladite première tôle (120) disposée à proximité dudit premier axe longitudinal présente des propriétés de surface améliorées, lesdites propriétés de surface améliorées étant fournies par un procédé choisi dans le groupe constitué par les traitements chimiques, le polissage, le ponçage et leurs combinaisons.

FIG. 1

EP 3 911 456 B1

FIG.2

EP 3 911 456 B1

FIG. 3

FIG. 4

FIG. 5

FIG. 6

FIG. 7

FIG. 8

335   120K          220    180

                                        120J

                                        215

120          210

# FIG. 9

180    340  220  335  120    220    180

120K   25    120

120                                                              120K

120                                                              120J

                                                                 215

120        210              210        120

# FIG. 10

FIG. 11

FIG. 12

EP 3 911 456 B1

Fig. 13

Fig. 14

Fig. 15

Fig. 16

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2104884 A